(19) Europäisches Patentamt
European Patent Office
Office européen des brevets

(11) **EP 4 478 292 A1**

(12) **EUROPEAN PATENT APPLICATION**
published in accordance with Art. 153(4) EPC

(43) Date of publication:
**18.12.2024 Bulletin 2024/51**

(21) Application number: **23769464.1**

(22) Date of filing: **03.02.2023**

(51) International Patent Classification (IPC):
**G06T 9/00** (2006.01)

(52) Cooperative Patent Classification (CPC):
**G06T 9/00**

(86) International application number:
**PCT/CN2023/074436**

(87) International publication number:
**WO 2023/173953 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2022 CN 202210254652**

(71) Applicant: **Huawei Technologies Co., Ltd.**
**Shenzhen, Guangdong 518129 (CN)**

(72) Inventors:
• **CHEN, Hu**
**Shenzhen, Guangdong 518129 (CN)**
• **LIN, Zehui**
**Shenzhen, Guangdong 518129 (CN)**
• **YU, Quanhe**
**Shenzhen, Guangdong 518129 (CN)**
• **CAI, Kangying**
**Shenzhen, Guangdong 518129 (CN)**
• **WEI, Rong**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **PROBE DATA PROCESSING AND CODING METHODS AND DEVICES**

(57) This application provides a probe data processing method and a probe data encoding method, and an apparatus. The probe data processing method in this application includes: obtaining a bitstream; parsing the bitstream to obtain first probe data in a current probe data group, where the first probe data corresponds to a nonlinear domain signal; obtaining a conversion function parameter of the current probe data group; obtaining an inverse conversion function of the current probe data group based on the conversion function parameter of the current probe data group; and performing spatial inverse conversion on the first probe data according to the inverse conversion function to obtain second probe data in the current probe data group, where the second probe data corresponds to one or more probes in a three-dimensional scene, and the second probe data corresponds to a linear domain signal. In this application, a quantization error perceived by human eyes becomes uniform, and a visual perception error is eliminated or reduced as much as possible.

400

| Obtain first probe data in a current probe data group, where the first probe data corresponds to one or more probes in a three-dimensional scene | 401 |
| Obtain a conversion function of the current probe data group | 402 |
| Perform spatial conversion on the first probe data according to the conversion function to obtain second probe data in the current probe data group | 403 |
| Encode the second probe data to obtain a first bitstream | 404 |

FIG. 4

**Description**

This application claims priority to Chinese Patent Application No. 202210254652.2, filed with the China National Intellectual Property Administration on March 15, 2022 and entitled "PROBE DATA PROCESSING METHOD AND PROBE DATA ENCODING METHOD, AND APPARATUS", which is incorporated herein by reference in its entirety.

**TECHNICAL FIELD**

This application relates to 3D encoding and decoding technologies, and in particular, to a probe data processing method and a probe data encoding method, and an apparatus.

**BACKGROUND**

With development of software and hardware technologies, people have an increasingly high requirement on an image generated by a computer rendering system, gradually transiting from effect with only direct illumination in the past to effect with more real and more illumination. A probe is one of common means to simulate illumination effect in the rendering system. The probe is placed in a 3D virtual scene to explore an ambient environment centered around the probe. Probe data may include ambient environment data and probe attribute data. The ambient environment data may include attribute data of the probe in different directions, for example, illumination, colors, visibility, materials, normal directions, and texture coordinates. The probe data may use formats of various precision. For example, the probe data may use RGB 10A2 (that is, each of three channels RGB occupies 10 bits and a channel A occupies two bits, and the channels are represented in a normalized integer form) or RGBA10F (that is, each of four channels RGBA occupies 16 bits, and the channels are represented in a floating point number form). Formats with different precision affect rendering effect. A format with higher precision has better rendering effect.

In a 3D scene, there are usually thousands of probes, and data collected by each probe further changes with time. It can be learned from that probe data in a scene, just probe illumination data, is already a large amount of data, and the probe data further changes with time. As a result, an amount of the probe data cannot be underestimated. Therefore, compressing the probe data plays an important role in optimizing storage and access of the probe data and reducing transmission overheads.

**SUMMARY**

This application provides a probe data processing method and a probe data encoding method, and an apparatus, so that a quantization error perceived by human eyes becomes uniform, and a visual perception error is eliminated or reduced as much as possible.

According to a first aspect, this application provides a probe data encoding method, where the method is applied to a first device. The method includes: obtaining first probe data in a current probe data group, where the first probe data corresponds to one or more probes in a three-dimensional scene, the first probe data is used by a second device to determine shading effect on an object in the three-dimensional scene in a rendering process, and the first probe data corresponds to a linear domain signal; obtaining a conversion function parameter of the current probe data group; obtaining a conversion function of the current probe data group based on the conversion function parameter of the current probe data group; performing spatial conversion on the first probe data according to the conversion function to obtain second probe data in the current probe data group, where the second probe data corresponds to a non-linear domain signal; and encoding the second probe data to obtain a first bitstream.

In this embodiment of this application, an encoder side performs spatial conversion on initially obtained probe data to obtain non-linear domain probe data. In this way, a quantization error perceived by human eyes can become uniform even though the human eyes perceive the quantization error non-uniformly, and a visual perception error can be eliminated or reduced as much as possible.

The probe data may include attribute data (including but not limited to: a type of a probe, an enable identifier of a probe, a position of a probe, and a position offset of a probe), and may further include environment data (including but not limited to: illumination data, color data, visibility data, texture coordinates, and material information).

In this embodiment of this application, the first probe data may correspond to a linear domain signal, or the first probe data may correspond to a non-linear domain signal. If the first probe data corresponds to the non-linear domain signal, domain conversion needs to be performed, to convert the first probe data from a non-linear domain to a linear domain. In a typical rendering system, data collected by a probe is generally a linear domain signal. However, to accelerate a convergence speed of a probe in a time domain filter, there is also a rendering system in which a non-linear operation is performed on data. In this case, the data collected by the probe is non-linear domain data, and then a non-linear domain signal needs to be converted from a non-linear domain to a linear domain for subsequent processing.

The conversion function parameter includes a function type and a parameter value corresponding to the function type.

When being collected, the probe data is represented as a high-precision signal, for example, a 16-bit floating point or a 32-bit floating point. To reduce an amount of data, the encoder side may usually quantize the probe data, but this may introduce a quantization error. In this embodiment of this application, based on that human visual perception is non-linear, before quantization, the probe data is converted from the linear domain to the non-linear domain to match human visual perception. In this way, a quantization error perceived by human eyes can become uniform even though the human eyes perceive the quantization error non-uniformly, and a visual perception error can be eliminated or reduced as much as possible. A function that completes the foregoing conversion process may be referred to as the conversion function. In the rendering system, the linear domain signal is a data domain in which addition and multiplication can be performed on a signal through a linear operation, and data of the non-linear domain signal is data that is obtained by performing non-linear function calculation from the linear domain and that cannot be added or multiplied through the linear operation. For example, a function exponential function in the non-linear domain can be used to convert linear domain data to an exponential domain, to obtain non-linear data in the exponential domain. In this embodiment of this application, the conversion function may be any one of a gamma (Gamma) function, a transfer function, a perceptual quantizer (perception quantization, PQ) function, a log function, and a hybrid logarithmic gamma (hybrid log-gamma, HLG) function. It should be noted that the foregoing describes several examples of the conversion function. In this embodiment of this application, another conversion function may be further used to implement domain conversion. This is not limited herein.

In this embodiment of this application, the encoder side may first determine whether the conversion function parameter of the current probe data group needs to be updated. When determining that the conversion function parameter of the current probe data group does not need to be updated, the encoder side may directly determine a conversion function parameter of a reference probe data group as the conversion function parameter of the current probe data group. The reference probe data group may refer to a probe data group that is encoded before the current probe data group. In this way, efficiency of obtaining the conversion function parameter may be improved. If the conversion function parameter of the reference probe data group is directly determined as the conversion function parameter of the current probe data group, the conversion function parameter of the current probe data group may not be written into a bitstream, to achieve effect of saving the bitstream.

Whether the conversion function parameter of the current probe data group needs to be updated may be determined in the following several methods.

1. When the current probe data group is a key group, it is determined that the conversion function parameter of the current probe data group needs to be updated; or when the current probe data group is a non-key group, it is determined that the conversion function parameter of the current probe data group does not need to be updated.

The key group is a probe data group using intra-frame coding, and the non-key group is a probe data group using inter-frame coding.

When it is determined that the conversion function parameter of the current probe data group needs to be updated, an intermediate conversion function parameter is obtained based on third probe data, where the conversion function parameter of the current probe data group is the intermediate conversion function parameter.

2. An intermediate conversion function parameter and the conversion function parameter of the reference probe data group are obtained. When a type of the intermediate conversion function is consistent with a type of the conversion function of the reference probe data group, a difference between the intermediate conversion function parameter and the conversion function parameter of the reference probe data group is calculated. When the difference is less than a first preset threshold, it is determined that the conversion function parameter of the current probe data group does not need to be updated, or when the difference is greater than or equal to the first preset threshold, it is determined that the conversion function parameter of the current probe data group needs to be updated. Alternatively, when the type of the intermediate conversion function is inconsistent with the type of the conversion function of the reference probe data group, it is determined that the conversion function parameter of the current probe data group needs to be updated.

The encoder side may obtain the reference probe data group in a preset manner, or use a probe data group whose similarity with the current probe data group is greater than a second preset threshold as the reference probe data group.

When it is determined that the conversion function parameter of the current probe data group needs to be updated, the intermediate conversion function parameter is determined as the conversion function parameter of the current probe data group.

The intermediate conversion function parameter is obtained based on the third probe data in the following steps: obtaining a plurality of groups of candidate conversion function parameters; obtaining a plurality of candidate conversion functions based on the plurality of groups of candidate conversion function parameters, where the plurality of candidate conversion functions correspond to the plurality of groups of candidate conversion function parameters; performing spatial conversion on the third probe data separately according to the plurality of candidate conversion functions to obtain a plurality of pieces of candidate fourth probe data, where the plurality of pieces of candidate fourth probe data correspond to the plurality of candidate conversion functions; obtaining a plurality of rendering results based on the plurality of pieces of candidate fourth probe data, where the plurality of rendering results correspond to the plurality of pieces of candidate fourth probe data; obtaining a target rendering result based on the third probe data; obtaining a plurality of error values between the plurality of rendering results and the target rendering result, where the plurality of error values correspond to the plurality of rendering results; and determining a candidate conversion function parameter corresponding to a smallest one of the plurality of error values as the intermediate conversion function parameter.

The obtaining a target rendering result based on the third probe data includes: obtaining a rendering parameter of a decoder side; and obtaining the target rendering result through estimation based on the rendering parameter of the decoder side and the third probe data.

Optionally, the encoder side may further encode the conversion function parameter of the current probe data group to obtain a second bitstream, so that the decoder side may directly obtain the conversion function parameter of the current probe data group, to improve decoding efficiency.

Optionally, when determining that the conversion function parameter of the current probe data group does not need to be updated, the encoder side sets an update flag to a first value. Alternatively, when determining that the conversion function parameter of the current probe data group needs to be updated, the encoder side sets the update flag to a second value, and encodes the update flag to obtain a third bitstream. To improve rendering efficiency, the update representation bit may be set to notify the decoder side of whether the probe data group updates the conversion function parameter. If no update is performed, the decoder side may directly use the conversion function parameter of the reference probe data group, and the encoder side does not need to write the conversion function parameter of the probe data group into the bitstream, to save the bitstream.

According to a second aspect, this application provides a probe data processing method, where the method is applied to a second device. The method includes: obtaining a bitstream; parsing the bitstream to obtain first probe data in a current probe data group, where the first probe data corresponds to a non-linear domain signal; obtaining an inverse conversion function of the current probe data group; and performing spatial inverse conversion on the first probe data according to the inverse conversion function to obtain second probe data in the current probe data group, where the second probe data corresponds to one or more probes in a three-dimensional scene, the second probe data is used by the second device to determine shading effect on an object in the three-dimensional scene in a rendering process, and the second probe data corresponds to a linear domain signal.

In this embodiment of this application, a decoder side performs spatial inverse conversion on probe data obtained by parsing a bitstream, to obtain probe data in a linear domain, so that probe data closest to a target rendering result can be restored, to improve rendering effect.

In a possible implementation, the obtaining an inverse conversion function of the current probe data group includes: obtaining a conversion function parameter of the current probe data group; and obtaining the inverse conversion function of the current probe data group based on the conversion function parameter of the current probe data group.

In a possible implementation, the conversion function parameter includes a function type and a parameter value corresponding to the function type.

In a possible implementation, the obtaining a conversion function parameter of the current probe data group includes: determining whether to update the conversion function parameter of the current probe data group; and when determining not to update the conversion function parameter of the current probe data group, determining a conversion function parameter of a reference probe data group as the conversion function parameter of the current probe data group.

In a possible implementation, the determining whether to update the conversion function parameter of the current probe data group includes: when the current probe data group is a key group, determining to update the conversion function parameter of the current probe data group; or when the current probe data group is a non-key group, determining not to update the conversion function parameter of the current probe data group.

In a possible implementation, the key group is a probe data group using intra-frame coding, and the non-key group is a probe data group using inter-frame coding.

In a possible implementation, the determining whether to update the conversion function parameter of the current probe data group includes: parsing the bitstream to obtain an update flag; and when the update flag is a first value, determining not to update the conversion function parameter of the current probe data group; or when the update flag is a second value, determining to update the conversion function parameter of the current probe data group.

In a possible implementation, the obtaining a conversion function parameter of the current probe data group further includes: when determining to update the conversion function parameter of the current probe data group, obtaining an intermediate conversion function parameter based on third probe data, where the conversion function parameter of the current probe data group is the intermediate conversion function parameter.

In a possible implementation, the determining whether to update the conversion function parameter of the current probe data group includes: obtaining an intermediate conversion function parameter based on third probe data;

determining an intermediate inverse conversion function based on the intermediate conversion function parameter; obtaining the conversion function parameter of the reference probe data group; determining an inverse conversion function of the reference probe data group based on the conversion function parameter of the reference probe data group; determining whether a function type of the intermediate inverse conversion function is consistent with a function type of the inverse conversion function of the reference probe data group; and when the function type of the intermediate inverse conversion function is consistent with the function type of the inverse conversion function of the reference probe data group, calculating a difference between the intermediate conversion function parameter and the conversion function parameter of the reference probe data group; and when the difference is less than a first preset threshold, determining not to update the conversion function parameter of the current probe data group; or when the difference is greater than or equal to the first preset threshold, determining to update the conversion function parameter of the current probe data group; or when the function type of the intermediate inverse conversion function is inconsistent with the function type of the inverse conversion function of the reference probe data group, determining to update the conversion function parameter of the current probe data group.

In a possible implementation, the obtaining a conversion function parameter of the current probe data group further includes: when determining to update the conversion function parameter of the current probe data group, determining the intermediate conversion function parameter as the conversion function parameter of the current probe data group.

In a possible implementation, the obtaining an intermediate conversion function parameter based on third probe data includes: obtaining a plurality of groups of candidate conversion function parameters; obtaining a plurality of candidate inverse conversion functions based on the plurality of groups of candidate conversion function parameters, where the plurality of candidate inverse conversion functions correspond to the plurality of groups of candidate conversion function parameters; performing spatial inverse conversion on the third probe data separately according to the plurality of candidate inverse conversion functions to obtain a plurality of pieces of candidate fourth probe data, where the plurality of pieces of candidate fourth probe data correspond to the plurality of candidate inverse conversion functions; obtaining a plurality of rendering results based on the plurality of pieces of candidate fourth probe data, where the plurality of rendering results correspond to the plurality of pieces of candidate fourth probe data; obtaining a target rendering result based on the third probe data; obtaining a plurality of error values between the plurality of rendering results and the target rendering result, where the plurality of error values correspond to the plurality of rendering results; and determining a candidate conversion function parameter corresponding to a smallest one of the plurality of error values as the intermediate conversion function parameter.

In a possible implementation, the obtaining a conversion function parameter of the current probe data group includes: parsing the bitstream to obtain the conversion function parameter of the current probe data group.

In a possible implementation, the inverse conversion function is an inverse function of any one of the following functions: a gamma function, a PQ function, a log function, and an HLG function.

In a possible implementation, after the performing spatial inverse conversion on the first probe data according to the inverse conversion function to obtain second probe data in the current probe data group, the method further includes: performing rendering based on the second probe data to obtain a rendered picture corresponding to the current probe data group.

In a possible implementation, the method further includes: obtaining the reference probe data group in a preset manner; or using a probe data group whose similarity with the current probe data group is greater than a second preset threshold as the reference probe data group.

According to a third aspect, this application provides a decoding apparatus, including: a decoding module, configured to: obtain a bitstream; parse the bitstream to obtain first probe data in a current probe data group, where the first probe data corresponds to a non-linear domain signal; an obtaining module, configured to obtain an inverse conversion function of the current probe data group; and an inverse conversion module, configured to perform spatial inverse conversion on the first probe data according to the inverse conversion function to obtain second probe data in the current probe data group, where the second probe data corresponds to one or more probes in a three-dimensional scene, the second probe data is used by the second device to determine shading effect on an object in the three-dimensional scene in a rendering process, and the second probe data corresponds to a linear domain signal.

In a possible implementation, the obtaining module is specifically configured to: obtain a conversion function parameter of the current probe data group; and obtain the inverse conversion function of the current probe data group based on the conversion function parameter of the current probe data group.

In a possible implementation, the conversion function parameter includes a function type and a parameter value corresponding to the function type.

In a possible implementation, the obtaining module is specifically configured to: determine whether to update the conversion function parameter of the current probe data group; and when determining not to update the conversion function parameter of the current probe data group, determine a conversion function parameter of a reference probe data group as the conversion function parameter of the current probe data group.

In a possible implementation, the obtaining module is specifically configured to: when the current probe data group is a key group, determine to update the conversion function parameter of the current probe data group; or when the current probe data group is a non-key group, determine not to update the conversion function parameter of the current probe data group.

In a possible implementation, the key group is a probe data group using intra-frame coding, and the non-key group is a probe data group using inter-frame coding.

In a possible implementation, the decoding module is further configured to parse the bitstream to obtain an update flag; and the obtaining module is specifically configured to: when the update flag is a first value, determine not to update the conversion function parameter of the current probe data group; or when the update flag is a second value, determine to update the conversion function parameter of the current probe data group.

In a possible implementation, the obtaining module is further configured to: when determining to update the conversion function parameter of the current probe data group, obtain an intermediate conversion function parameter based on third probe data, where the conversion function parameter of the current probe data group is the intermediate conversion function parameter.

In a possible implementation, the obtaining module is specifically configured to: obtain an intermediate conversion function parameter based on third probe data; determine an intermediate inverse conversion function based on the intermediate conversion function parameter; obtain the conversion function parameter of the reference probe data group; determine an inverse conversion function of the reference probe data group based on the conversion function parameter of the reference probe data group; determine whether a function type of the intermediate inverse conversion function is consistent with a function type of the inverse conversion function of the reference probe data group; and when the function type of the intermediate inverse conversion function is consistent with the function type of the inverse conversion function of the reference probe data group, calculate a difference between the intermediate conversion function parameter and the conversion function parameter of the reference probe data group; and when the difference is less than a first preset threshold, determine not to update the conversion function parameter of the current probe data group; or when the difference is greater than or equal to the first preset threshold, determine to update the conversion function parameter of the current probe data group; or when the function type of the intermediate inverse conversion function is inconsistent with the function type of the inverse conversion function of the reference probe data group, determine to update the conversion function parameter of the current probe data group.

In a possible implementation, the obtaining module is further configured to: when determining to update the conversion function parameter of the current probe data group, determine the intermediate conversion function parameter as the conversion function parameter of the current probe data group.

In a possible implementation, the obtaining module is specifically configured to: obtain a plurality of groups of candidate conversion function parameters; obtain a plurality of candidate inverse conversion functions based on the plurality of groups of candidate conversion function parameters, where the plurality of candidate inverse conversion functions correspond to the plurality of groups of candidate conversion function parameters; perform spatial inverse conversion on the third probe data separately according to the plurality of candidate inverse conversion functions to obtain a plurality of pieces of candidate fourth probe data, where the plurality of pieces of candidate fourth probe data correspond to the plurality of candidate inverse conversion functions; obtain a plurality of rendering results based on the plurality of pieces of candidate fourth probe data, where the plurality of rendering results correspond to the plurality of pieces of candidate fourth probe data; obtain a target rendering result based on the third probe data; obtain a plurality of error values between the plurality of rendering results and the target rendering result, where the plurality of error values correspond to the plurality of rendering results; and determine the candidate conversion function parameter corresponding to a smallest one of the plurality of error values as an intermediate conversion function parameter.

In a possible implementation, the decoding module is further configured to parse the bitstream to obtain the conversion function parameter of the current probe data group.

In a possible implementation, the inverse conversion function is an inverse function of any one of the following functions: a gamma function, a PQ function, a log function, and an HLG function.

In a possible implementation, the decoding apparatus further includes: a rendering module, configured to perform rendering based on the second probe data to obtain a rendered picture corresponding to the current probe data group.

In a possible implementation, the obtaining module is further configured to: obtain the reference probe data group in a preset manner; or use a probe data group whose similarity with the current probe data group is greater than a second preset threshold as the reference probe data group.

According to a fourth aspect, this application provides an encoding apparatus, including: an obtaining module, configured to: obtain first probe data in a current probe data group, where the first probe data corresponds to one or more probes in a three-dimensional scene, the first probe data is used by a second device to determine shading effect on an object in the three-dimensional scene in a rendering process, and the first probe data corresponds to a linear domain signal; and obtain a conversion function of the current probe data group; a conversion module, configured to perform spatial conversion on the first probe data according to the conversion function to obtain second probe data in the current probe data group, where the second probe data corresponds to a non-linear domain signal; and an encoding module, configured to encode the second probe data to obtain a first bitstream.

In a possible implementation, the obtaining module is specifically configured to: obtain a conversion function parameter of the current probe data group; and obtain the conversion function of the current probe data group based on the conversion function parameter of the current probe data group.

In a possible implementation, the conversion function parameter includes a function type and a parameter value corresponding to the function type.

In a possible implementation, the obtaining module is specifically configured to: determine whether to update the conversion function parameter of the current probe data group; and when determining not to update the conversion function parameter of the current probe data group, determine a conversion function parameter of a reference probe data group as the conversion function parameter of the current probe data group.

In a possible implementation, the obtaining module is specifically configured to: when the current probe data group is a key group, determine to update the conversion function parameter of the current probe data group; or when the current probe data group is a non-key group, determine not to update the conversion function parameter of the current probe data group.

In a possible implementation, the key group is a probe data group using intra-frame coding, and the non-key group is a probe data group using inter-frame coding.

In a possible implementation, the obtaining module is further configured to: when determining to update the conversion function parameter of the current probe data group, obtain an intermediate conversion function parameter based on third probe data, where the conversion function parameter of the current probe data group is the intermediate conversion function parameter.

In a possible implementation, the obtaining module is specifically configured to: obtain an intermediate conversion function parameter based on third probe data; determine an intermediate conversion function based on the intermediate conversion function parameter; obtain the conversion function parameter of the reference probe data group; determine a conversion function of the reference probe data group based on the conversion function parameter of the reference probe data group; determine whether a type of the intermediate conversion function is consistent with a type of the conversion function of the reference probe data group; and when the type of the intermediate conversion function is consistent with the type of the conversion function of the reference probe data group, calculate a difference between the intermediate conversion function parameter and the conversion function parameter of the reference probe data group; and when the difference is less than a first preset threshold, determine not to update the conversion function parameter of the current probe data group; or when the difference is greater than or equal to the first preset threshold, determine to update the conversion function parameter of the current probe data group; or when the type of the intermediate conversion function is inconsistent with the type of the conversion function of the reference probe data group, determine to update the conversion function parameter of the current probe data group.

In a possible implementation, the obtaining module is further configured to: when determining to update the conversion function parameter of the current probe data group, determine the intermediate conversion function parameter as the conversion function parameter of the current probe data group.

In a possible implementation, the obtaining module is specifically configured to: obtain a plurality of groups of candidate conversion function parameters; obtain a plurality of candidate conversion functions based on the plurality of groups of candidate conversion function parameters, where the plurality of candidate conversion functions correspond to the plurality of groups of candidate conversion function parameters; perform spatial conversion on the third probe data separately according to the plurality of candidate conversion functions to obtain a plurality of pieces of candidate fourth probe data, where the plurality of pieces of candidate fourth probe data correspond to the plurality of candidate conversion functions; obtain a plurality of rendering results based on the plurality of pieces of candidate fourth probe data, where the plurality of rendering results correspond to the plurality of pieces of candidate fourth probe data; obtain a target rendering result based on the third probe data; obtain a plurality of error values between the plurality of rendering results and the target rendering result, where the plurality of error values correspond to the plurality of rendering results; and determine a candidate conversion function parameter corresponding to a smallest one of the plurality of error values as the intermediate conversion function parameter.

In a possible implementation, the obtaining module is specifically configured to: obtain a rendering parameter of a decoder side; and obtain the target rendering result through estimation based on the rendering parameter of the decoder side and the third probe data.

In a possible implementation, the conversion function is any one of a gamma function, a PQ function, a log function, and an HLG function.

In a possible implementation, the encoding module is further configured to encode the conversion function parameter of the current probe data group to obtain a second bitstream.

In a possible implementation, the encoding module is further configured to: when determining not to update the conversion function parameter of the current probe data group, set an update flag to a first value; or when determining to update the conversion function parameter of the current probe data group, set the update flag to a second value; and encode the update flag to obtain a third bitstream.

In a possible implementation, the obtaining module is further configured to: obtain the reference probe data group in a preset manner; or use a probe data group whose similarity with the current probe data group is greater than a second preset threshold as the reference probe data group.

According to a fifth aspect, this application provides a decoder, including: one or more processors; and a memory, configured to store one or more programs. When the one or more programs are executed by the one or more processors, the one or more processors are enabled to implement the method in any one of the implementations of the first aspect.

According to a sixth aspect, this application provides an encoder, including: one or more processors; and a memory, configured to store one or more programs. When the one or more programs are executed by the one or more processors, the one or more processors are enabled to implement the method in any implementation of the second aspect.

According to a seventh aspect, this application provides a computer-readable storage medium, including a computer program. When the computer program is executed on a computer, the computer is enabled to perform the method in any one of the first aspect and the second aspect.

According to an eighth aspect, this application provides a computer program product. The computer program product includes instructions. When the instructions are run on a computer or a processor, the computer or the processor is enabled to implement the method in any one of the first aspect or the second aspect.

## BRIEF DESCRIPTION OF DRAWINGS

FIG. 1a is a diagram of an example of a system framework;
FIG. 1b is a diagram of an example of probe distribution in a three-dimensional scene;
FIG. 2a is a diagram of an example of an encoding framework;
FIG. 2b is a diagram of an example of a structure of a data form conversion module;
FIG. 3a is a diagram of an example of a decoding framework;
FIG. 3b is a diagram of an example of a structure of a data form conversion module;
FIG. 4 is a flowchart of a process 400 of a probe data encoding method according to an embodiment of this application;
FIG. 5 is a curve diagram of an example of a gamma function;
FIG. 6 is a curve diagram of an example of a PQ function;
FIG. 7 is a curve diagram of an example of an HLG function;
FIG. 8 is a flowchart of a process 800 of a probe data processing method according to an embodiment of this application;
FIG. 9a and FIG. 9b show experimental simulation results obtained in solutions of this application;
FIG. 10a and FIG. 10b are framework diagrams of examples of a probe data encoding and decoding method;
FIG. 11a and FIG. 11b are framework diagrams of examples of a probe data encoding and decoding method;
FIG. 12a and FIG. 12b are framework diagrams of examples of a probe data encoding and decoding method;
FIG. 13 is a framework diagram of an example of a probe data encoding and decoding method;
FIG. 14 is a diagram of an example of a structure of a decoding apparatus 1400 according to an embodiment of this application; and
FIG. 15 is a diagram of an example of a structure of an encoding apparatus 1500 according to an embodiment of this application.

## DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

For example, embodiments of this application may be applied to an N-end (that is, N-device) collaborative rendering scene, where N is an integer greater than 1.

In a possible scenario, one device may generate rendering input information (the rendering input information may include one or more of the following: a three-dimensional object model (which may also be referred to as a 3-dimension (3-dimension, 3D) object model), probe data, and the like, this is not limited in this application, and in this application, an example in which the rendering input information is the probe data is used for description), and then distribute the probe data to the other N-1 devices. After receiving the probe data, the other N-1 devices may determine shading effect on an object (corresponding to the three-dimensional object model) in a three-dimensional scene based on the probe data in a rendering process. After rendering is completed, a rendered picture may be obtained.

In a possible scenario, N1 (a value range of N1 is 2 to N, N1 may be equal to 2 or N, and N1 is an integer) devices may collaboratively generate probe data, where each of the N1 devices generates a part of the probe data. Then, each of the N1 devices distributes the part of the probe data generated by the device to the other N-1 devices. After receiving the probe data, in a rendering process, each of the N1 devices may determine shading effect on an object in a three-dimensional scene based on the received probe data and the part of the probe data generated by each of the N1 devices. After rendering is completed, a rendered picture may be obtained. After receiving the probe data, in the rendering process, the other N-N1 devices may determine shading effect on an object in the three-dimensional scene based on the received probe data. After rendering is completed, a rendered picture may be obtained.

For ease of description, the device that generates the probe data in the N-end collaborative rendering scenario may be referred to as a first device, and the device that is used for rendering and that determines the shading effect on the object in the three-dimensional scene based on the probe data in the rendering process is referred to as a second device. A same device may be the first device or the second device. This is not limited in this application. The first device may be a server or a terminal, and the second device may be a terminal.

In addition, for example, embodiments of this application may also be applied to a signal-device rendering scenario. The device may not only generate probe data, but also determine shading effect on an object in a three-dimensional scene based on the probe data in a rendering process, for example, a terminal.

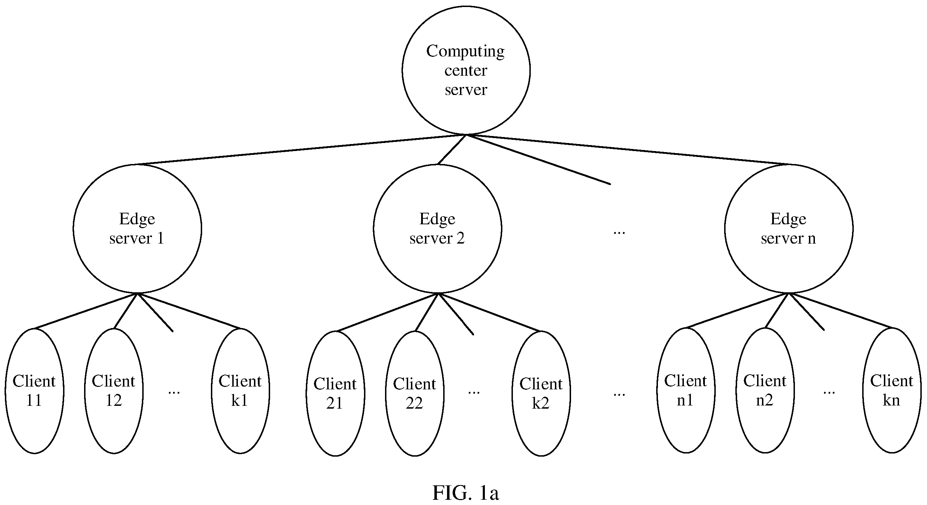

FIG. 1a is a diagram of an example of a system framework. In an embodiment of FIG. 1a, a first device is a computing center server disposed on a cloud, and a second device is a client. FIG. 1a is a diagram of an example of a framework of a device-cloud collaborative rendering system.

Refer to FIG. 1a. For example, the device-cloud collaborative rendering system may include a computing center server, an edge server, and a client. There may be n edge servers (n is an integer greater than 1). There may be k1+k2+...+kn clients, and k1, k2, ..., and kn are all positive integers. The computing center server is connected to the n edge servers, and each edge server is connected to at least one client. As shown in FIG. 1a, an edge server 1 is connected to k1 clients: a client 11, a client 12, ..., and a client k1, an edge server 2 is connected to k2 clients: a client 21, a client 22, ..., and a client k2, and an edge server n is connected to kn clients: a client n1, a client n2, ..., and a client kn.

For example, the computing center server may be a server, or may be a server cluster. This is not limited in this application.

For example, the quantity n of edge servers is not limited in this application, and may be specifically set based on an actual application scenario. This is not limited in this application.

For example, a quantity of clients connected to each edge server is not limited in this application, and may be specifically set based on an actual application scenario. In addition, quantities of clients connected to all edge servers may be the same or may be different (that is, k1, k2, ..., and kn may be equal or different). This may be specifically set based on an actual application scenario. This is not limited in this application.

For example, the client may include but is not limited to a terminal device such as a personal computer, a mobile phone, or a virtual reality (Virtual Reality, VR) wearable device.

It should be understood that the framework of the device-cloud collaborative rendering system shown in FIG. 1a shows merely an example of a framework of a device-cloud collaborative rendering system in this application. In the device-cloud collaborative rendering system in this application, a computing center server and an edge server may be a same server. Alternatively, the device-cloud collaborative rendering system in this application does not include an edge server, but a computing center server is connected to each client. This is not limited in this application. In this application, the framework of the device-cloud collaborative rendering system shown in FIG. 1a is used as an example for description.

For example, the computing center server may be configured to generate probe data.

For example, the edge server may be configured to distribute the probe data.

For example, the client may be configured to perform rendering and display a rendered picture. In a rendering process, shading effect on an object in a three-dimensional scene may be determined based on the probe data.

For example, all N-end collaborative rendering scenarios such as cloud gaming, cloud exhibition, indoor decoration, a clothing design, and an architectural design may be implemented by using the framework of the device-cloud collaborative rendering system shown in FIG. 1a.

For example, in the cloud gaming scenario, after receiving a field of view switching indication sent by the client 11, the computing center server may generate probe data of a gaming scenario corresponding to a target field of view, and then send the probe data to the edge server 1, and the edge server 1 sends the probe data to the client 11. After receiving the probe data, the client 11 may perform rendering, and determine, in a rendering process based on the received probe data, shading effect on an object in the gaming scenario corresponding to the target field of view. After rendering is completed, a picture in the gaming scenario corresponding to the target field of view may be obtained and displayed.

For example, in the indoor decoration scene, after receiving a furniture addition indication sent by the client 21, the computing center server may generate probe data corresponding to a living room scene to which target furniture is added, and then send the probe data to the edge server 2, and the edge server 2 sends the probe data to the client 21. After receiving the probe data, the client 21 may perform rendering, and determine, in a rendering process based on received probe data, shading effect on an object in the living room scenario to which the target furniture is added. After rendering is completed, a picture of the living room to which the target furniture is added may be obtained and displayed.

For ease of subsequent description, the following describes a process in which the computing center server generates the probe data and a process in which the client determines the shading effect on the object in the three-dimensional scene based on the probe data in the rendering process.

The process in which the computing center server generates the probe data is as follows:

For example, the rendering process of the computing center server may be as follows: A three-dimensional object model (which may include a model of a person or a model of an object) is loaded to a three-dimensional scene (which may also be referred to as a 3D scene) (in this way, the three-dimensional object model may be converted to an object in the three-dimensional scene), and then the object in the three-dimensional scene may be rendered to obtain a current frame (that is, a rendered picture). In a process of rendering the object in the three-dimensional scene, a plurality of probes may be placed in the three-dimensional scene, and an ambient environment is detected by using the probes, to obtain probe data, and then shading effect on the object in the three-dimensional scene is determined based on the probe data, so as to simulate the shading effect on the object in the three-dimensional scene after a light ray in the three-dimensional scene is reflected for a plurality of times.

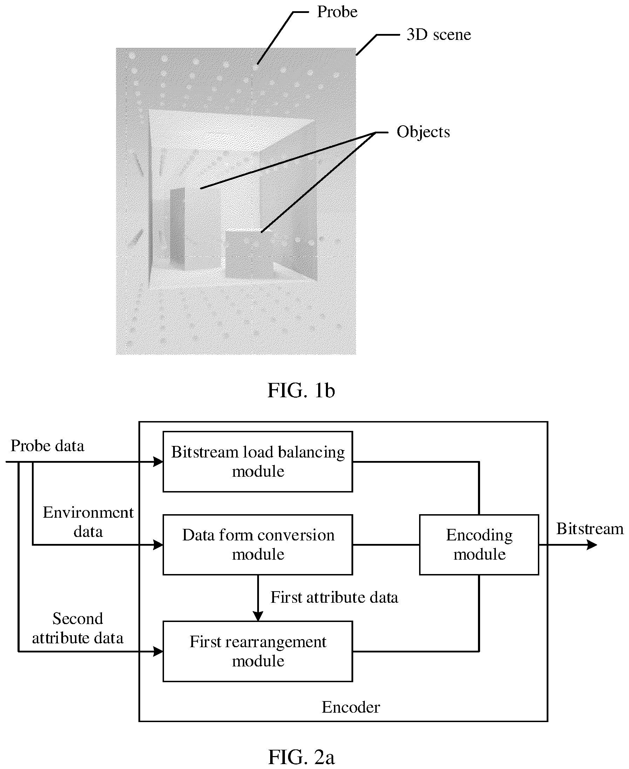

FIG. 1b is a diagram of an example of probe distribution in a three-dimensional scene. Each small ball in FIG. 1b represents one probe. In an embodiment of FIG. 1b, the probe is a dynamic diffuse global illumination (Dynamic Diffuse Global Illumination, DDGI) probe.

Refer to FIG. 1b. For example, a position at which each probe is placed in the three-dimensional scene and a position relationship between each probe and another probe may be set based on a requirement. This is not limited in this application. For example, in FIG. 1b, distances between each probe and six probes in six directions (right above, right below, right ahead, right behind, right left, and right) around the probe are equal. In addition, a quantity of probes placed in the three-dimensional scene may also be set based on a requirement. This is not limited in this application either.

After a plurality of probes are placed in the three-dimensional scene, corresponding attribute data (the attribute data is used in a rendering process) may be configured for each probe based on a scene requirement. The attribute data includes but is not limited to: a type of a probe (such as a reflection probe or a DDGI probe), an enable identifier of a probe, a position of a probe, a position offset of a probe (for example, after probes are placed in a preset manner, initial positions of the probes may be obtained, and positions of some probes may be adjusted to obtain better shading effect, and therefore for each of these probes, an offset between an adjusted position and an initial position may be referred to as a position offset of the probe, for example, after probes are placed in the manner shown in FIG. 1b, distances between each probe and six probes around the probe are equal; or if a position of one probe is adjusted, distances between the probe and six probes around the probe are unequal), and the like. This is not limited in this application.

For example, after a plurality of probes are placed in a three-dimensional scene, each probe may detect an ambient environment centered around the probe, that is, detect features of surrounding objects centered around the probe in the three-dimensional scene, and record the features as environment data of the probe. The environment data may include illumination data, color data, visibility data, normal directions, texture coordinates, material information, and the like. The illumination data may be used to describe emergent illumination of an object around the probe. The visibility data may be used to describe distribution (which may also be referred to as depth distribution) of distances between the probe and objects around the probe, and may include but is not limited to distance data, a variance of the distance data, a square of the distance data, and the like. This is not limited in this application. The following provides an example for description by using an example in which the illumination data and the visibility data are generated.

For example, a DDGI algorithm may be used to generate illumination data and visibility data corresponding to each probe. The following uses one probe in a current frame as an example to describe a process of generating illumination data and visibility data of the probe. First, several light rays emitted from the probe are sampled, and first intersection points of the several light rays and objects in the three-dimensional scene are calculated. Then, a distance between the probe and the first intersection point of each of the several light rays of the probe and each object in the three-dimensional scene is calculated, to obtain initial distance data; and illumination at the first intersection point of each of the several light rays and each object in the three-dimensional scene is calculated, to obtain initial illumination data. Then, the initial distance data may be converted from a discrete domain to spherical data in a continuous domain. Specifically, filtering processing may be performed on the initial distance data on a spherical surface according to a $\cos^k$ kernel function (k is a positive integer), to obtain candidate distance data. In addition, the initial distance data may be converted from a discrete domain to spherical data in a continuous domain. Specifically, filtering processing may be performed on a square of the initial distance data on a spherical surface according to a $\cos^k$ kernel function (k is a positive integer), to obtain a square of the candidate distance data. In addition, the initial illumination data may be converted from a discrete domain to spherical data in a continuous domain. Specifically, filtering processing may be performed on the initial illumination data on a spherical surface according to a cos kernel function (k is a positive integer), to obtain the candidate illumination data. Then, weighted calculation is performed on the candidate distance data of the probe and distance data of the probe in a previous frame to obtain distance data of the probe in the current frame. Weighted calculation is performed on the square of the candidate distance data of the probe and a square of distance data of the probe in a previous frame to obtain a square of distance data of the probe in the current frame. Weighted calculation is performed on the candidate illumination data of the probe and illumination data of the probe in a previous frame, to obtain illumination data of the probe in the current frame. In this way, illumination data and visibility data of all probes in the current frame can be obtained.

For example, both the illumination data and the visibility data of each probe may be represented by a two-dimensional picture, or may be represented by a spherical harmonic function basis coefficient, or may be represented by a spherical wavelet basis coefficient. This is not limited in this application.

It should be noted that, it is assumed that M (M is a positive integer) probes are included in the three-dimensional scene, where M1 probes have any one of illumination data, visibility data, and attribute data, M2 probes have any two of illumination data, visibility data, and attribute data, M3 probes have illumination data, visibility data, and attribute data, and M4 probes do not have probe data. M1+M2+M3+M4=M, M1, M2, M3, and M1 are all integers, and values of M1, M2, M3, and M4 may be set based on a requirement. This is not limited in this application.

For example, the probe data may include the attribute data and the environment data that are used in the rendering process.

A process in which the client determines the shading effect on the object in the three-dimensional scene based on the probe data in the rendering process is as follows.

For example, in the rendering process of the client, the probe data may be used to calculate the shading effect on the object in the three-dimensional scene. Specifically, when each pixel is rendered, coordinates of 3D space corresponding to the pixel are first obtained, and then eight probes surrounding the coordinates are searched for. Next, a contribution weight of each probe to the pixel is calculated based on visibility data of the probe, that is, whether the probe and 3D coordinates of the probe are mutually visible is determined based on a distance. If the probe and the 3D coordinates of the probe are mutually not visible, the weight is 0. If the probe and the 3D coordinates of the probe are mutually visible, the contribution weight of the probe is calculated based on a distance, a square of the distance, and a position of the probe. Then, weighted averaging is performed on illumination data of the probe by using the contribution weight, to obtain a shading result of the pixel.

Because an amount of the probe data is large, the computing center server can compress the probe data and then send compressed data to the client, to reduce bandwidth usage of the server and client and a rendering delay of the client. Correspondingly, after receiving a bitstream, the client may decode the bitstream to restore the probe data, and then may determine the shading effect on the object in the three-dimensional scene based on the probe data in the rendering process.

FIG. 2a is a diagram of an example of an encoding framework.

Refer to FIG. 2a. For example, an encoder may include a bitstream load balancing module, a data form conversion module, a first rearrangement module, and an encoding module.

For example, the bitstream load balancing module may be configured to determine a target bit rate and a coding scheme (for example, intra-frame coding or inter-frame coding) of probe data.

For example, the data form conversion module may be configured to: perform data form conversion on environment data, to convert the environment data to a more compact representation; or increase a quantity of bits occupied in a bitstream by data that is of higher importance and that is required in a rendering process.

For example, the first rearrangement module may be configured to rearrange attribute data of a probe. The attribute data of the probe may include attribute data (referred to as first attribute data subsequently) used for data form conversion and attribute data (referred to as second attribute data subsequently) used in the rendering process.

For example, the encoding module is configured to perform encoding to obtain a bitstream.

It should be noted that steps performed by the bitstream load balancing module, the data form conversion module, and the first rearrangement module belong to steps in an encoding procedure of the encoder.

It should be understood that FIG. 2a shows merely an example of the encoder in this application, and the encoder in this application may have fewer modules than those in FIG. 2a. For example, the encoder includes a bitstream load balancing module, a data form conversion module, and an encoding module. For another example, the encoder includes a data form conversion module, a first rearrangement module, and an encoding module. For still another example, the encoder includes a data form conversion module and an encoding module. In addition, the encoder in this application may have more modules than those in FIG. 2a. This is not limited in this application.

It should be understood that the bitstream load balancing module, the data form conversion module, the first rearrangement module, and the encoding module in FIG. 2a may be modules independent of each other, or any two or more of the modules are a whole. This is not limited in this application. In addition, the bitstream load balancing module, the data form conversion module, the first rearrangement module, and the encoding module are logical modules. The encoder may be further divided into other modules or these modules have other names. This is not limited in this application either.

It should be understood that, in a possible manner, the encoder includes only the encoding module, the bitstream load balancing module, the data form conversion module, and the first rearrangement module may be independent of the encoder. This is not limited in this application. In this application, the encoder in FIG. 2a is used as an example for description.

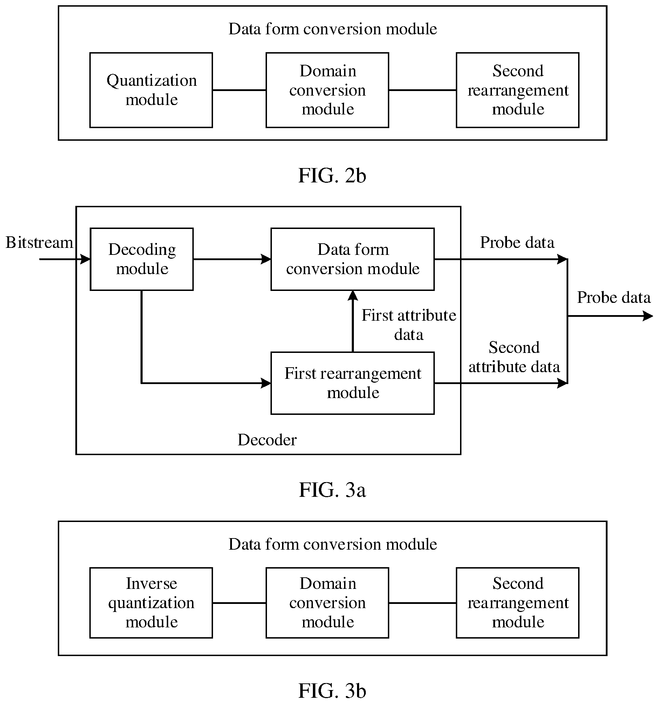

FIG. 2b is a diagram of an example of a structure of a data form conversion module.

Refer to FIG. 2b. For example, the data form conversion module may include a quantization module, a domain conversion module, and a second rearrangement module.

For example, the quantization module may be configured to perform quantization.

For example, the domain conversion module may be configured to perform domain conversion.

For example, the domain conversion may be converting a representation form of data from one domain to another domain. The domain may be classified from different perspectives based on a requirement. For example:

from a perspective of whether normalization is performed, the domain may be classified into a normalized domain and a non-normalized domain;

from a perspective of a color, the domain may be classified into an RGB domain, a YUV domain, a XYZ domain, and a Lab domain;

from a perspective of a numerical relationship, the domain may be classified into a linear domain and a non-linear domain, where the non-linear domain may be an exponential domain, a perceptual quantizer (Perceptual Quantization, PQ) domain, a hybrid logarithmic gamma (Hybrid log gamma, HLG) domain, or the like; and

from a perspective of a numerical representation form, the domain may be classified into a picture domain and a transform domain. For example, the picture domain may be a domain represented by using an image. For example, the transform domain may be a domain represented by using a transform basis function and a corresponding transform coefficient. Data $Y(t)$ in the transform domain may be approximated based on $x$ transform bases $e\_1(t)$ to $e\_x(t)$, so that the data $Y(t)$ is approximately equal to a sum of $x$ transform bases multiplied by the corresponding transform coefficient. The transform basis includes but is not limited to a spherical harmonic function basis, a spherical wavelet basis, an eigenvector, and the like. This is not limited in this application.

For example, the second rearrangement module may be configured to rearrange data.

It should be understood that FIG. 2b shows merely an example of the data form conversion module in this application. The data form conversion module in this application may have fewer modules than those in FIG. 2b. For example, the data form conversion module includes only a domain conversion module. For another example, the data form conversion module includes only a quantization module and a domain conversion module. For another example, the data form conversion module includes only a domain conversion module and a second rearrangement module. This is not limited in this application. In addition, the data form conversion module in this application may have more modules than those in FIG. 2b. This is not limited in this application either.

It should be understood that the quantization module, the domain conversion module, and the second rearrangement module in FIG. 2b may be modules independent of each other, or any two or more of the modules are a whole. This is not limited in this application. In addition, the quantization module, the domain conversion module, and the second rearrangement module are logical modules. The data form conversion module may be further divided into other modules or these modules have other names. This is not limited in this application either.

FIG. 3a is a diagram of an example of a decoding framework.

Refer to FIG. 3a. For example, a decoder may include a data form conversion module, a first rearrangement module, and a decoding module.

For example, the data form conversion module may be configured to perform data form conversion on a part of data obtained by decoding a bitstream, to obtain environment data of a probe.

For example, the first rearrangement module may be configured to rearrange the part of data obtained by decoding the bitstream, to obtain attribute data of the probe. The attribute data of the probe may include attribute data (referred to as first attribute data subsequently) used for data form conversion and attribute data (referred to as second attribute data subsequently) used in the rendering process.

For example, the decoding module is configured to decode the bitstream.

It should be noted that steps performed by the data form conversion module and the first rearrangement module are steps in a decoding procedure of the decoder.

It should be understood that FIG. 3a shows merely an example of the decoder in this application. The decoder in this application may have fewer modules than those in FIG. 3a. For example, the decoder includes a data form conversion module and a decoding module. This is not limited in this application. Alternatively, the decoder in this application may have more modules than those shown in FIG. 3a. This is not limited in this application.

It should be understood that the data form conversion module, the first rearrangement module, and the decoding module in FIG. 3a may be modules independent of each other, or any two or more of the modules are a whole. This is not limited in this application. In addition, the data form conversion module, the first rearrangement module, and the decoding module are logical modules. The decoder may be further divided into other modules or these modules have other names. This is not limited in this application either.

It should be understood that, in a possible example, the decoder may include only the decoding module, the data form conversion module and the first rearrangement module may be independent of the decoder. This is not limited in this application. In this application, the decoder in FIG. 3a is used as an example for description.

FIG. 3b is a diagram of an example of a structure of a data form conversion module.

Refer to FIG. 3b. For example, the data form conversion module may include an inverse quantization module, a domain conversion module, and a second rearrangement module.

For example, the inverse quantization module may be configured to perform inverse quantization. It should be understood that inverse quantization is an inverse process of quantization.

For example, the domain conversion module may be configured to perform domain conversion. For example, the domain conversion may be converting a representation form of data from one domain to another domain. The domain may be classified from different perspectives based on a requirement. For example:

from a perspective of whether normalization is performed, the domain may be classified into a normalized domain and a non-normalized domain;
from a perspective of color space, the domain may be classified into an RGB domain, a YUV domain, a XYZ domain, a Lab domain, and the like;
from a perspective of a numerical relationship, the domain may be classified into a linear domain and a non-linear domain, where the non-linear domain may be an exponential domain, a perceptual quantizer (Perceptual Quantization, PQ) domain, a hybrid logarithmic gamma (Hybrid log gamma, HLG) domain, or the like; and
from a perspective of a numerical representation form, the domain may be classified into a picture domain and a transform domain. For example, the picture domain may be a domain represented by using an image. For example, the transform domain may be a domain represented by using a transform basis function and a corresponding transform coefficient. Data Y(t) in the transform domain may be approximated based on x transform bases $e\_1(t)$ to $e\_x(t)$, so that the data Y(t) is approximately equal to a sum of x transform bases multiplied by the corresponding transform coefficient. The transform basis includes but is not limited to a spherical harmonic function basis, a spherical wavelet basis, an eigenvector, and the like. This is not limited in this application.

For example, the second rearrangement module may be configured to rearrange data.

It should be understood that FIG. 3b shows merely an example of the data form conversion module in this application. The data form conversion module in this application may have fewer modules than those in FIG. 3b. For example, the data form conversion module includes only an inverse quantization module and a domain conversion module, or the data form conversion module includes only a domain conversion module and a second rearrangement module. This is not limited in this application. Alternatively, the data form conversion module in this application may have more modules than those in FIG. 3b. This is not limited in this application.

It should be understood that the inverse quantization module, the domain conversion module, and the second rearrangement module in FIG. 3b may be modules independent of each other, or any two or more of the modules are a whole. This is not limited in this application. In addition, the inverse quantization module, the domain conversion module, and the second rearrangement module are logical modules. The data form conversion module may be further divided into other modules or these modules have other names. This is not limited in this application either.

Based on the foregoing scenario, an embodiment of this application provides a probe data processing method and a probe data encoding method. The probe data processing method may be performed by the foregoing second device, may be alternatively by the foregoing single device, especially performed by the data form conversion module in the foregoing device, or may be further performed by the domain conversion module in the data form conversion module. The probe data encoding method may be performed by the first device, may be alternatively performed by the single device, especially by the data form conversion module in the foregoing device, or may be further performed by the domain conversion module in the data form conversion module. This is not limited in this application. The following describes the solutions in embodiments of this application by using embodiments.

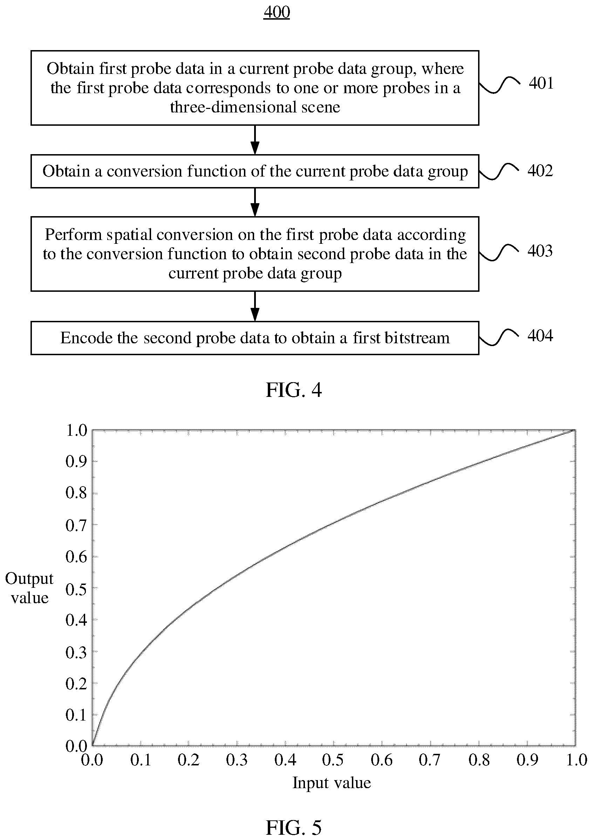

FIG. 4 is a flowchart of a process 400 of a probe data encoding method according to an embodiment of this application. The process 400 is applied to an encoder side, and may be performed by the foregoing first device, may be alternatively performed by the foregoing single device, especially by the data form conversion module in the foregoing device, or may be further performed by the domain conversion module in the data form conversion module. The process 400 is described as a series of steps or operations. It should be understood that the steps or the operations of the process 400 may be performed in various sequences and/or simultaneously, and are not limited to an execution sequence shown in FIG. 4. The process 400 may include the following steps.

Step 401: Obtain first probe data in a current probe data group, where the first probe data corresponds to one or more probes in a three-dimensional scene.

In a process of rendering the object in the three-dimensional scene, a plurality of probes may be placed in the three-dimensional scene, and an ambient environment is detected by using the probes, to obtain probe data, and then shading effect on the object in the three-dimensional scene is determined based on the probe data, so as to simulate the shading effect on the object in the three-dimensional scene after a light ray in the three-dimensional scene is reflected for a plurality of times. As described above, the probe data may include attribute data (including but not limited to: a type of a probe, an enable identifier of a probe, a position of a probe, and a position offset of a probe), and may further include environment data (including but not limited to: illumination data, color data, visibility data, texture coordinates, and material information). Because an amount of the probe data is large, to improve data transmission efficiency, the encoder side may compress the probe data.

In this embodiment of this application, the first probe data may correspond to a linear domain signal, or the first probe data may correspond to a non-linear domain signal. If the first probe data corresponds to the non-linear domain signal, domain conversion needs to be performed, to convert the first probe data from a non-linear domain to a linear domain. In a typical rendering system, data collected by a probe is generally a linear domain signal. However, to accelerate a convergence speed of a probe in a time domain filter, there is also a rendering system in which a non-linear operation is performed on data. In this case, the data collected by the probe is non-linear domain data, and then a non-linear domain signal needs to be converted from a non-linear domain to a linear domain for subsequent processing.

Step 402: Obtain a conversion function of the current probe data group.

In this embodiment of this application, the encoder side may first obtain the conversion function parameter of the current probe data group, and then obtain the conversion function of the current probe data group based on the conversion function parameter of the current probe data group.

The conversion function parameter includes a function type and a parameter value corresponding to the function type.

When being collected, the probe data is represented as a high-precision signal, for example, a 16-bit floating point or a 32-bit floating point. To reduce an amount of data, the encoder side may usually quantize the probe data, but this may introduce a quantization error. In this embodiment of this application, based on that human visual perception is non-linear, before quantization, the probe data is converted from the linear domain to the non-linear domain to match human visual perception. In this way, a quantization error perceived by human eyes can become uniform even though the human eyes perceive the quantization error non-uniformly, and a visual perception error can be eliminated or reduced as much as possible. A function that completes the foregoing conversion process may be referred to as the conversion function. In the rendering system, the linear domain signal is a data domain in which addition and multiplication can be performed on a signal through a linear operation, and data of the non-linear domain signal is data that is obtained by performing non-linear function calculation from the linear domain and that cannot be added or multiplied through the linear operation. For example, a function exponential function in the non-linear domain can be used to convert linear domain data to an exponential domain, to obtain non-linear data in the exponential domain. In this embodiment of this application, the conversion function may be any one of a gamma (Gamma) function, a transfer function, a perceptual quantizer (perception quantization, PQ) function, a log function, and a hybrid logarithmic gamma (hybrid log-gamma, HLG) function.


1. Gamma function


In the ITU-R Recommendation BT.1886 standard, a conversion function based on a "Gamma" function is defined. FIG. 5 is a curve diagram of an example of the gamma function. The gamma function is represented as follows:

$$V = 1.099L^{0.45} - 0.099 \ \ for \ \ 1 \geq L \geq 0.018$$

$$V = 4.500 \ \ for \ \ 0.018 > L \geq 0$$

2. PQ function

With upgrade of a display device, an illuminance range of the display device increases continuously. Illuminance of a present consumer-level high dynamic range (high dynamic range,

HDR) display reaches $600\frac{cd}{m^2}$, and illuminance of a high-end HDR display can reach $2000\frac{cd}{m^2}$, which is far beyond illuminance of a low dynamic range (standard dynamic range, SDR) display device. Therefore, an improved transfer function is required to adapt to the upgrade of the display device. At present, common conversion functions are a PQ function and an HLG function.

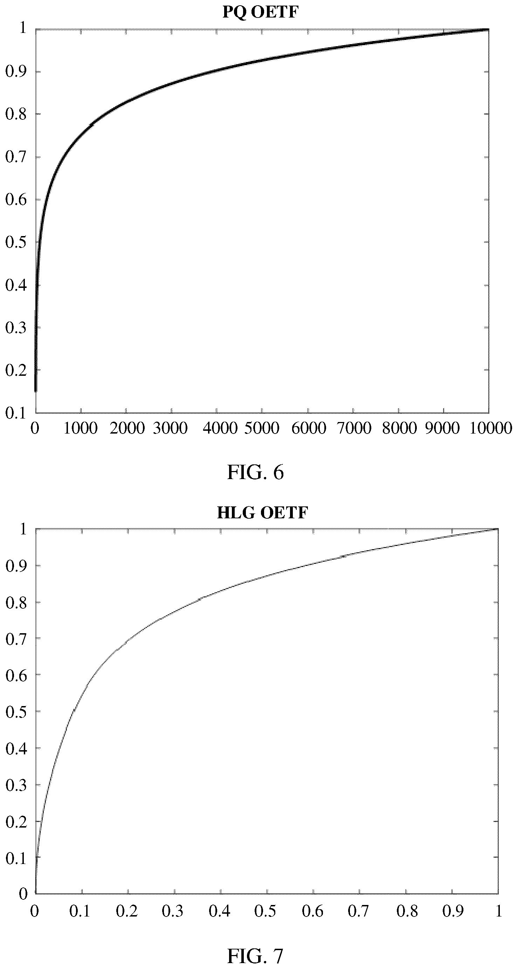

FIG. 6 is a curve diagram of an example of a PQ function. The PQ function is represented as follows:

$$\begin{cases} R' = PQ_{TF}\left(max\left(0,min\left(\frac{R}{10000,1}\right)\right)\right) \\ G' = PQ_{TF}\left(max\left(0,min\left(\frac{G}{10000,1}\right)\right)\right) \\ B' = PQ_{TF}\left(max\left(0,min\left(\frac{B}{10000,1}\right)\right)\right) \end{cases}$$

Parameters corresponding to R, G, and B in the foregoing formula may be calculated according to a formula

$$L' = PQ_{TF\left(\frac{c_1+c_2L^{m_1}}{1+c_3L^{m_1}}\right)^{m_2}}$$, where

L indicates a linear signal value, and the value is normalized to [0, 1];

L' indicates a non-linear signal value, and a range of the value is [0, 1];

$$m_1 = \frac{2610}{4096} \times \frac{1}{4} = 0.1593017578125$$, that is, a PQ transfer coefficient;

$$m_2 = \frac{2523}{4096} \times 128 = 78.84375$$, that is, a PQ transfer coefficient;

$$c_1 = c_3 - c_2 + 1 = \frac{3424}{4096} = 0.8359375$$, that is, a PQ transfer coefficient;

$$c_2 = \frac{2413}{4096} \times 32 = 18.8515625$$, that is, a PQ transfer coefficient; and

$$c_3 = \frac{2392}{4096} \times 32 = 18.6875$$, that is, a PQ transfer coefficient.

3. HLG function

An HLG function is obtained by improving a conventional gamma curve. The HLG function uses a conventional gamma function in a low segment and complements a log function in a high segment. The HLG function represents a conversion relationship between a linear signal value and a non-linear signal value in an HLG domain. FIG. 7 is a curve diagram of an example of the HLG function. The HLG function is represented as follows:

$$L' = \mathrm{HLG}_{\mathrm{TF}(L)} = \begin{cases} \frac{\sqrt{L}}{2,0} \leq L \leq 1 \\ aln(L - b), 1 < L \end{cases},$$

where

L indicates a linear signal value, and a range of the value is [0, 12];
L' indicates a non-linear signal value, and a range of the value is [0, 1];
a=0.17883277, that is, an HLG transfer coefficient;
b=0.28466892, that is, an HLG transfer coefficient; and
c=0.55991073, that is, an HLG transfer coefficient.

4. Log function

A format of a log function is as follows:

$$L' = \frac{log(L+a)+log(a)}{log(1+a)-log(a)},$$

where

L indicates a linear signal value, and a range of the value is [0, 1];
L' indicates a non-linear signal value, and a range of the value is [0, 1]; and
a is a coefficient of the log function, and a range of the value is [0, 1].

It should be noted that the foregoing describes several examples of the conversion function. In this embodiment of this application, another conversion function may be further used to implement domain conversion. This is not limited herein.

As described above, there are a plurality of types of conversion functions, each type of conversion function corresponds to one or more parameters, and different types definitely correspond to different conversion functions. Even for a same type, because different parameter values correspond to different conversion functions, the conversion function parameter includes information in two aspects: a function type and a parameter value corresponding to the function type. The encoder side needs to determine a type of the conversion function, and determine a parameter value of the foregoing type.

In this embodiment of this application, the encoder side may first determine whether the conversion function parameter of the current probe data group needs to be updated. When determining that the conversion function parameter of the current probe data group does not need to be updated, the encoder side may directly determine a conversion function parameter of a reference probe data group as the conversion function parameter of the current probe data group. The reference probe data group may refer to a probe data group that is encoded before the current probe data group. In this way, efficiency of obtaining the conversion function parameter may be improved. If the conversion function parameter of the reference probe data group is directly determined as the conversion function parameter of the current probe data group, the conversion function parameter of the current probe data group may not be written into a bitstream, to achieve effect of saving the bitstream.

Whether the conversion function parameter of the current probe data group needs to be updated may be determined in the following several methods.

1. When the current probe data group is a key group, it is determined that the conversion function parameter of the current probe data group needs to be updated; or when the current probe data group is a non-key group, it is determined that the conversion function parameter of the current probe data group does not need to be updated.

The key group is a probe data group using intra-frame coding, and the non-key group is a probe data group using inter-frame coding.

For example, when an HEVC encoder is used to encode probe data, whether a conversion function parameter is updated is determined based on a type of a probe data group. If the group is an I group (that is, a key group), the update is performed. If the group is a P group or a B group (that is, a non-key group), the update is not performed. Because the P group and the B group each usually use another probe data group as a reference group to perform inter-group prediction, if conversion function parameters of the P group and the B group are updated, an updated conversion function is different from the conversion function of the reference group. As a result, accuracy of inter-group prediction is affected and coding efficiency is reduced. In contrast, the I group usually uses intra-group prediction, so that there is no the foregoing problem when a conversion function parameter of the I group is updated.

Intra prediction

An intra prediction mode set may include 35 different intra prediction modes, for example, non-directional modes such as a DC (or average) mode and a planar mode or directional modes such as those defined in high efficiency video coding (high efficiency video coding, HEVC), or may include 67 different intra prediction modes, for example, non-directional modes such as a DC (or average) mode and a planar mode or directional modes such as those defined in VVC. For example, several conventional angular intra prediction modes are adaptively replaced with wide-angle intra prediction modes for non-square blocks defined in VVC. For another example, to avoid a division operation for DC prediction, only a longer side is used to calculate an average for non-square blocks. In addition, an intra prediction result in the planar mode may be modified by using a position dependent intra prediction combination (position dependent intra prediction combination, PDPC) method.

In a possible implementation, an inter prediction mode set depends on an available reference image (namely, for example, at least partially decoded image stored in the DBP) and another inter prediction parameter, for example, depends on whether the entire reference image or only a part of the reference image is used, for example, a best matched reference block is searched for around a search window area of an area of the current block, and/or depends on whether pixel interpolation such as half-pixel and/or quarter-pixel interpolation is applied.

Intra prediction modes in HEVC include a direct current prediction mode, a planar prediction mode, and 33 angle prediction modes. That is, there are 35 candidate prediction modes in total. A current block may use pixels of reconstructed picture blocks on left and upper sides as references to perform intra prediction. A picture block that is in a surrounding area of the current block and that is used to perform intra prediction on the current block becomes a reference block, and a pixel in the reference block is referred to as a reference pixel. In the 35 candidate prediction modes, the direct current prediction mode is applicable to an area whose texture is flat in the current block, and all pixels in the area use an average of reference pixels in the reference block for prediction. The planar prediction mode is applicable to a picture block whose texture changes smoothly. For the current block that meets the condition, bilinear interpolation is performed by using the reference pixels in the reference block for prediction of all pixels in the current block. In the angle prediction mode, a value of a reference pixel in a corresponding reference block is copied along an angle for prediction of all pixels in the current block by using a feature that texture of the current block is highly correlated with texture of a neighboring reconstructed picture block.

Reconstructed samples of neighboring blocks of a same current picture are used based on an intra prediction mode of the intra prediction mode set, to generate an intra predicted block.

Inter prediction

In a possible implementation, an inter prediction mode set depends on an available reference picture (for example, a picture that is at least partially decoded previously and that is stored in the DBP) and another inter prediction parameter, for example, depends on whether the entire reference picture or only a part of the reference picture is used, for example, a best matched reference block is searched for in a search window area near an area of the current block, and/or depends on whether half-pixel interpolation, quarter-pixel interpolation, and/or 1/16-pixel interpolation is performed.

In addition to the foregoing prediction modes, a skip mode and a direct mode may be applied.

For example, a merge candidate list in an extended merge prediction mode includes the following five candidate types in sequence: spatial MVP from spatially neighboring CUs, temporal MVP from collocated CUs, history-based MVP from a FIFO table, pairwise average MVP, and zero MVs. Decoder side motion vector refinement (decoder side motion vector refinement, DMVR) based on bilateral matching may be performed to increase accuracy of an MV in the merge mode. A merge mode with an MVD (merge mode with MVD, MMVD) comes from a merge mode with a motion vector difference. An MMVD flag is sent immediately after a skip flag and a merge flag are sent, to specify whether the MMVD mode is used for a CU. A CU-level adaptive motion vector resolution (adaptive motion vector resolution, AMVR) scheme may be used. AMVR supports encoding of an MVD of the CU at different precision. An MVD of a current CU may be adaptively selected based on a prediction mode of the current CU. When the CU is encoded in the merge mode, a combined inter/intra prediction (combined inter/intra prediction, CIIP) mode may be applied to the current CU. Weighted averaging is performed on inter and intra prediction signals to achieve CIIP prediction. For affine motion compensation prediction, an affine motion field of a block is described by using motion information of a motion vector of two control point (4-parameter) or three control point motion vectors (6-parameter). Subblock-based temporal motion vector prediction (subblock-based temporal motion vector prediction, SbTMVP) is similar to temporal motion vector prediction (temporal motion vector prediction, TMVP) in HEVC, but is to predict a motion vector of a sub-CU in the current CU. A bi-directional optical flow (bi-directional optical flow, BDOF), previously referred to as a BIO, is a simplified version that requires less computation, especially in terms of a quantity of multiplications and a value of a multiplier. In a triangulation mode, a CU is evenly split into two triangular parts in two split manners: diagonal split and anti-diagonal split. In addition, a bi-directional prediction mode is extended on the basis of simple averaging to support weighted averaging of two prediction signals.

Inter prediction may include motion estimation (motion estimation, ME) and motion compensation (motion compensation, MC). The motion estimation may be used for receiving or obtaining a picture block and a decoded picture, or at least one or more previously reconstructed blocks, for example, a reconstructed block of one or more other/different previously decoded pictures, for motion estimation. For example, a video sequence may include a current picture and a previously decoded picture; in other words, the current picture and the previously decoded picture may be a part of a picture sequence that forms the video sequence or form the picture sequence.

For example, the encoder may be configured to select a reference block from a plurality of reference blocks of a same picture or different pictures in a plurality of other pictures, and provide a reference picture (or a reference picture index) and/or an offset (a spatial offset) between a position (x and y coordinates) of a reference block and a position of a current block as an inter prediction parameter to a motion estimation unit. This offset is also called a motion vector (motion vector, MV).

The motion compensation is used for obtaining, for example, receiving, an inter prediction parameter and performing inter prediction based on or using the inter prediction parameter, to obtain an inter predicted block. Motion compensation performed by a motion compensation unit may include extracting or generating a predicted block based on a motion/block vector determined through motion estimation, and may further include performing interpolation at sub-pixel precision. Interpolation filtering may be performed to generate a sample of another pixel from a sample of a known pixel, to potentially increase a quantity of candidate predicted blocks that may be used for encoding a picture block. Once a motion vector corresponding to a PU of a current picture block is received, the motion compensation unit may locate a predicted block to which the motion vector points in one reference picture list.

The motion compensation unit may further generate syntax elements related to a block and a video slice to be used by the video decoder 30 to decode a picture block of the video slice. Alternatively, as an alternative to a slice and a corresponding syntax element, a tile group and/or a tile and a corresponding syntax element may be generated or used.

When the video slice is encoded as an intra coded (intra coded, I) slice, intra prediction is used for generating a predicted block for a picture block of a current video slice based on an indicated intra prediction mode and data from a previously decoded block of the current picture. When the video picture is encoded as an inter coded (that is, B or P) slice, inter prediction (for example, the motion compensation unit) is used for generating a predicted block for a video block of a current video slice based on a motion vector and another syntax element that is received from entropy decoding. For inter prediction, the predicted blocks may be generated from one reference picture in one reference picture list. A decoder side may construct reference frame lists 0 and 1 by using a default construction technology and based on reference pictures stored in the DPB. In addition to a slice (for example, a video slice) or as an alternative to the slice, a same or similar process may be performed on an embodiment of a tile group (for example, a video tile group) and/or a tile (for example, a video tile). For example, a video may be encoded by using an I, P, or B tile group and/or tile.

Prediction information for a video block of a current video slice is determined by parsing a motion vector and another syntax element, and a predicted block for the current video block that is being decoded is generated by using the prediction information. For example, some received syntax elements are used to determine a prediction mode (for example, intra prediction or inter prediction) of a video block used to encode a video slice, a type of an inter predicted slice (for example, a B slice, a P slice, or a GPB slice), construction information of one or more reference picture lists used for the slice, a motion vector of each inter coded video block used for the slice, an inter prediction state of each inter coded video block used for the slice, and other information, to decode the video block in the current video slice. In addition to a slice (for example, a video slice) or as an alternative to the slice, a same or similar process may be performed on an embodiment of a tile group (for example, a video tile group) and/or a tile (for example, a video tile). For example, a video may be encoded by using an I, P, or B tile group and/or tile.

In this case, when it is determined that the conversion function parameter of the current probe data group needs to be updated, an intermediate conversion function parameter is obtained based on third probe data, where the conversion function parameter of the current probe data group is the intermediate conversion function parameter.

2. An intermediate conversion function parameter and the conversion function parameter of the reference probe data group are obtained. When a type of the intermediate conversion function is consistent with a type of the conversion function of the reference probe data group, a difference between the intermediate conversion function parameter and the conversion function parameter of the reference probe data group is calculated. When the difference is less than a first preset threshold, it is determined that the conversion function parameter of the current probe data group does not need to be updated, or when the difference is greater than or equal to the first preset threshold, it is determined that the conversion function parameter of the current probe data group needs to be updated. Alternatively, when the type of the intermediate conversion function is inconsistent with the type of the conversion function of the reference probe data group, it is determined that the conversion function parameter of the current probe data group needs to be updated.

The reference probe data group is a probe data group whose similarity with the current probe data group is greater than a second preset threshold. The similarity may be measured in a plurality of measurement manners. This is not limited in this embodiment of this application. The measurement manners include but are not limited to: calculating a Pearson correlation coefficient between two probe data groups, where if the Pearson correlation coefficient is greater than the second preset threshold, it is considered that one of the two probe data groups may be used as a reference probe data group of the other group; or calculating a PSNR between two probe data groups, where if the PSNR is greater than a preset threshold, it is considered that one of the two probe data groups may be used as a reference probe data group of the other group.

The encoder side may directly obtain the conversion function parameter of the reference probe data group, and further determine the conversion function of the reference probe data group, the type of the conversion function, and a parameter value.

The encoder side may obtain the intermediate conversion function parameter based on the third probe data, and further determine the intermediate conversion function, the type of the intermediate conversion function, and a parameter value based on the intermediate conversion function parameter.

As an intermediate parameter, the intermediate conversion function parameter may become the conversion function parameter of the current probe data group. As an alternative of the conversion function parameter of the current probe data group, when the type of the intermediate conversion function is inconsistent with the type of the conversion function of the reference probe data group, it indicates that spatial conversion methods of the two are completely different. Therefore, the conversion function parameter of the reference probe data group cannot be used for the current probe data group, and it is determined that the conversion function parameter of the current probe data group needs to be updated. When the type of the intermediate conversion function is consistent with the type of the conversion function of the reference probe data group, it indicates that spatial conversion methods of the two are the same, and whether parameter values in this type of function are similar needs to be further determined, that is, a difference between corresponding parameters in two groups of parameter values is obtained. If the difference is less than the first preset threshold, it may be considered that the parameter values are similar, and therefore it is determined that the conversion function parameter of the current probe data group does not need to be updated. If the difference is greater than or equal to the first preset threshold, it may be considered that parameter values are not similar, and therefore it is determined that the conversion function parameter of the current probe data group needs to be updated.

In this case, when it is determined that the conversion function parameter of the current probe data group needs to be updated, the intermediate conversion function parameter is determined as the conversion function parameter of the current probe data group.

At the encoder side, the third probe data may be probe data in the current probe data group. Alternatively, the third probe data may also be probe data in first N probe data groups of the current probe data group, where N≥1. For example, a sequence number of the current probe data group is 6, and the first N probe data groups may include a probe data group whose sequence number is 5, the first N probe data groups may include a probe data group whose sequence numbers are 1, 3, and 5, or the first N probe data groups may include a probe data group whose sequence numbers are 4 and 5. This is not limited. The intermediate conversion function parameter is obtained based on the third probe data in the following steps:

1. Obtain a plurality of groups of candidate conversion function parameters.
The plurality of groups of candidate conversion function parameters may be preset, or may be obtained according to a preset rule. This is not limited herein. In addition, function types of the plurality of groups of candidate conversion function parameters may be all the same, may be different, or may be partially the same and partially different. This is not limited either. There may be two or more groups of candidate conversion function parameters, for example, four groups of candidate conversion function parameters. This is not limited either. For example, there are four groups of candidate conversion function parameters: two groups with a gamma function but different parameter values, one group with a PQ function, and one group with an HLG function. For another example, a type of the conversion function is a gamma function, and 2.2 or 4 may be selected as a parameter value. For another example, a type of the conversion function is an HLG function, and two groups of different values of a, b, and c may be set for parameter values. It should be understood that, the candidate conversion function parameter may be determined based on experience or a large amount of test data. A larger quantity of candidate conversion function parameters is preferred under a limitation of computing power of the encoder side.

2. Obtain a plurality of candidate conversion functions based on the plurality of groups of candidate conversion function parameters, where the plurality of candidate conversion functions correspond to the plurality of groups of candidate conversion function parameters.
As described above, when the type of the function and the corresponding parameter value are determined, the conversion function may be obtained. For a specific function, refer to the foregoing description. Details are not described herein again. It should be noted that, the conversion function parameters one-to-one correspond to the conversion functions. As long as there is one group of conversion function parameters, a type of a conversion function and a parameter value corresponding to the type of the conversion function may be determined based on the group of conversion function parameters, to obtain the conversion function.

3. Perform spatial conversion on the third probe data separately according to the plurality of candidate conversion functions to obtain a plurality of pieces of candidate fourth probe data, where the plurality of pieces of candidate fourth probe data correspond to the plurality of candidate conversion functions.

For performing spatial conversion on the third probe data according to the conversion function, refer to the foregoing description of the conversion function. Details are not described herein again. Because the plurality of candidate conversion functions are obtained in step 2, spatial conversion is separately performed on the third probe data according to the plurality of conversion functions, to obtain the plurality of pieces of candidate fourth probe data. The plurality of pieces of candidate fourth probe data may one-to-one correspond to the plurality of candidate conversion functions.

4. Obtain a plurality of rendering results based on the plurality of pieces of candidate fourth probe data, where the plurality of rendering results correspond to the plurality of pieces of candidate fourth probe data.

The encoder side may simulate rendering effect of the decoder side, and perform rendering based on the plurality of pieces of candidate fourth probe data, to obtain the plurality of rendering results. The encoder side may obtain a plurality of rendering parameters of the decoder side, including but not limited to values of parameters such as a camera position, a camera direction, a screen display capability, and a field of view (Field of view), and use the plurality of pieces of candidate fourth probe data to simulate rendering of an image of the decoder side based on the foregoing parameters, to obtain the plurality of rendering results.

5. Obtain a target rendering result based on the third probe data.

The encoder side may simulate the foregoing rendering effect of the decoder side, and perform rendering based on the third probe data.

6. Obtain a plurality of error values between the plurality of rendering results and the target rendering result, where the plurality of error values correspond to the plurality of rendering results.

The third probe data is probe data before spatial conversion, and is not quantized. Therefore, there is no quantization error. It may be considered that the third probe data corresponds to a lossless rendering result without a compression error. Factors related to estimation of the rendering result include a 3D model, a probe illumination value, an exposure coefficient, a hue mapping method, and the like. The plurality of pieces of candidate fourth probe data may be obtained according to the plurality of candidate conversion functions, and the fourth probe data is probe data obtained after spatial conversion. An objective is to find an optimal group of conversion function parameters from the plurality of candidate conversion functions. In this embodiment of this application, based on the foregoing rendering result, the rendering result corresponding to the third probe data may be used as a target. Candidate fourth probe data corresponding to a rendering result that is closest to the target rendering result in the plurality of rendering results corresponding to the plurality of pieces of candidate fourth probe data is to-be-searched probe data obtained after spatial conversion, and a conversion function parameter corresponding to the candidate fourth probe data is the optimal group of conversion function parameters.

For example, the encoder side may calculate error values between the plurality of rendering results and the target rendering result, to obtain a plurality of error values that one-to-one correspond to the plurality of rendering results. The error value may include an absolute error, a square difference, and the like. This is not limited herein.

7. Determine a candidate conversion function parameter corresponding to a smallest one of the plurality of error values as the intermediate conversion function parameter.

It may be considered that a rendering result corresponding to the smallest error value is closest to the target rendering result. Therefore, a candidate conversion function parameter corresponding to the smallest error value may be determined as the intermediate conversion function parameter.

Optionally, the encoder side may first obtain the rendering parameter of the decoder side, and then obtain the target rendering result through estimation based on the rendering parameter of the decoder side and the third probe data.

The rendering parameter may include SDR/HDR information, a conversion function (for example, a gamma function, a PQ function, or an HLG function) used by a display signal, a bit width of a display signal, a color gamut of a display signal, maximum display luminance, minimum display luminance, a hue mapping curve parameter, and the like. The rendering parameter is used to estimate the target rendering result. For example, if an SDR screen is used at the decoder side and a gamma function is used, the encoder side estimates a signal obtained after a rendering result of the decoder side is converted to a gamma domain of an SDR. If an HDR screen is used at the decoder side and a PQ function is used, the encoder side estimates a signal obtained after a rendering result of the decoder side is converted to a PQ domain of an HDR. Based on experience, if the SDR is used at the decoder side, a bit width allocated to a dark area is smaller, contrast in the dark area is poor, and contrast in a bright area is good. Therefore, for compression of probe data, a conversion function with a stable dark area and a steep bright area tends to be selected, a smaller bit rate is allocated to the dark area, and a larger bit rate is allocated to the bright area, to adapt to an SDR display feature of the decoder side. On the contrary, if the HDR is used at the decoder side, a larger bit width is allocated to a dark area than that of the SDR, and contrast in the dark area is obviously higher than that of the SDR. Therefore, for compression of probe data, a slope of a conversion function in the dark area tends to be increased, a slope of the bright area is reduced properly, and a large bit rate is allocated to the dark area, to adapt to a rendering parameter of the HDR of the decoder side. In this embodiment of this application, the decoder side may transmit the rendering parameter to the encoder side in an initial phase. If the rendering parameter of the decoder side changes in a use process, for example, a user adjusts luminance of a display, or switches between the SDR mode and the HDR mode, the decoder side may transmit an updated rendering parameter to the encoder side in real time. The decoder side feeds back the rendering parameter to the encoder side, and the encoder side can more accurately estimate the target rendering result, and more accurately calculate the optimal conversion function parameter, to improve rendering quality.

In conclusion, the conversion function parameter that is of the current probe data group and that is determined in the foregoing process may correspond to a rendering result closest to the target rendering result. This can improve final rendering quality.

The conversion function parameter that is of the current probe data group and that is determined in the foregoing process includes a type of the conversion function and a parameter value corresponding to the type of the conversion function. Therefore, a corresponding conversion function may be obtained. For details, refer to the foregoing description about the conversion function. Details are not described herein again.

Step 403: Perform spatial conversion on the first probe data according to the conversion function to obtain second probe data in the current probe data group.

The second probe data corresponds to a non-linear domain signal. According to the conversion function in this embodiment of this application, the probe data is converted from the linear domain to the non-linear domain to match human visual perception. In this way, a quantization error perceived by human eyes can become uniform even though the human eyes perceive the quantization error non-uniformly, and a visual perception error can be eliminated or reduced as much as possible.

Step 404: Encode the second probe data to obtain a first bitstream.

After the foregoing processing, the encoder side may encode the obtained second probe data to obtain the first bitstream.

Optionally, the encoder side may further encode the conversion function parameter of the current probe data group to obtain a second bitstream, so that the decoder side may directly obtain the conversion function parameter of the current probe data group, to improve decoding efficiency.

Optionally, when it is determined that the conversion function parameter of the current probe data group does not need to be updated, the encoder side sets an update flag to a first value. Alternatively, when it is determined that the conversion function parameter of the current probe data group needs to be updated, the encoder side sets the update flag to a second value, and encodes the update flag to obtain a third bitstream. To improve rendering efficiency, the update representation bit may be set to notify the decoder side of whether the probe data group updates the conversion function parameter. If no update is performed, the decoder side may directly use the conversion function parameter of the reference probe data group, and the encoder side does not need to write the conversion function parameter of the probe data group into the bitstream, to save the bitstream.

In this embodiment of this application, the encoder side performs spatial conversion on initially obtained probe data to obtain non-linear domain probe data. In this way, a quantization error perceived by human eyes can become uniform even though the human eyes perceive the quantization error non-uniformly, and a visual perception error can be eliminated or reduced as much as possible.

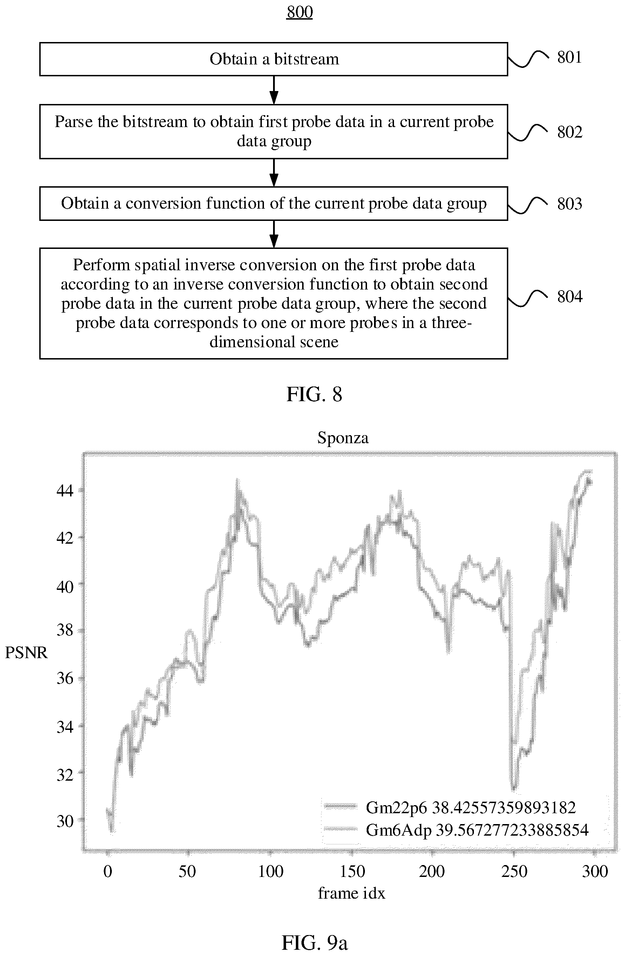

FIG. 8 is a flowchart of a process 800 of a probe data processing method according to an embodiment of this application. The process 800 is applied to a decoder side, and may be performed by the foregoing second device, may be alternatively performed by the foregoing single device, especially by the data form conversion module in the foregoing device, or may be further performed by the domain conversion module in the data form conversion module. The process 800 is described as a series of steps or operations. It should be understood that the steps or the operations of the process 800 may be performed in various sequences and/or simultaneously, and are not limited to an execution sequence shown in FIG. 8. The process 800 may include the following steps.

Step 801: Obtain a bitstream.

Step 802: Parse the bitstream to obtain first probe data in a current probe data group.

An encoder side writes probe data that is obtained after spatial conversion and that corresponds to a non-linear domain into the bitstream, and transmits the bitstream to a decoder side. Correspondingly, the first probe data obtained after the decoder side parses the bitstream corresponds to a non-linear domain signal.

Step 803: Obtain a conversion function of the current probe data group.

In this embodiment of this application, the decoder side may first obtain a conversion function parameter of the current probe data group, and then obtain the conversion function of the current probe data group based on the conversion function parameter of the current probe data group.

Similarly, the conversion function parameter of the decoder side also includes a function type and a parameter value corresponding to the function type. In this embodiment of this application, the inverse conversion function may be any one of a gamma (Gamma) function, a perceptual quantizer (perception quantization, PQ) function, a log function, and a hybrid logarithmic gamma (hybrid log-gamma, HLG) function.

The decoder side may obtain the conversion function parameter of the current probe data group in the following several methods.

1. The bitstream is parsed to obtain the conversion function parameter of the current probe data group.

As described in step 405, after determining the conversion function parameter of the current probe data group, the encoder side may write the conversion function parameter into the bitstream, and transmit the bitstream to the decoder side. Therefore, the decoder side may directly parse the bitstream to obtain the conversion function parameter of the current probe data group.

2. The decoder side may first determine whether the conversion function parameter of the current probe data group needs to be updated. When it is determined that the conversion function parameter of the current probe data group does not need to be updated, the decoder side determines a conversion function parameter of a reference probe data group as the conversion function parameter of the current probe data group. The reference probe data group may refer to a probe data group decoded before the current probe data group, or may refer to a probe data group decoded after the current probe data group. For a method for obtaining the reference probe data group, refer to the foregoing description. Details are not described herein again. In this way, efficiency of obtaining the conversion function parameter may be improved. If the conversion function parameter of the reference probe data group is directly determined as the conversion function parameter of the current probe data group, the bitstream may not be parsed, and decoding efficiency is improved.

Whether the conversion function parameter of the current probe data group needs to be updated may be determined in the following several methods.

1. When the current probe data group is a key group, it is determined that the conversion function parameter of the current probe data group needs to be updated; or when the current probe data group is a non-key group, it is determined that the conversion function parameter of the current probe data group does not need to be updated.

The key group is a probe data group using intra-frame coding, and the non-key group is a probe data group using inter-frame coding.

When it is determined that the conversion function parameter of the current probe data group needs to be updated, an intermediate conversion function parameter is obtained based on third probe data, where the conversion function parameter of the current probe data group is the intermediate conversion function parameter.

For the method, refer to the description of the encoder side. Details are not described herein again.

2. The bitstream is parsed to obtain an update flag. When the update flag is a first value, it is determined that the conversion function parameter of the current probe data group does not need to be updated; or when the update flag is a second value, it is determined that the conversion function parameter of the current probe data group needs to be updated.

When it is determined that the conversion function parameter of the current probe data group needs to be updated, an intermediate conversion function parameter is obtained based on third probe data, where the conversion function parameter of the current probe data group is the intermediate conversion function parameter.

For the method, refer to the description of the encoder side. Details are not described herein again.

3. An intermediate conversion function parameter and the conversion function parameter of the reference probe data group are obtained. When a function type of the intermediate inverse conversion function is consistent with a function type of the inverse conversion function of the reference probe data group, a difference between the intermediate conversion function parameter and the conversion function parameter of the reference probe data group is calculated. When the difference is less than a first preset threshold, it is determined that the conversion function parameter of the current probe data group does not need to be updated, or when the difference is greater than or equal to the first preset threshold, it is determined that the conversion function parameter of the current probe data group needs to be updated. Alternatively, when the function type of the intermediate inverse conversion function is inconsistent with the function type of the inverse conversion function of the reference probe data group, it is determined that the conversion function parameter of the current probe data group needs to be updated.

The reference probe data group is a probe data group whose similarity with the current probe data group is greater than a second preset threshold.

The decoder side may obtain the conversion function parameter of the reference probe data group, and further determine the inverse conversion function of the reference probe data group, the type of the inverse conversion function, and a parameter value.

The decoder side may obtain the intermediate conversion function parameter based on the third probe data, and further determine the intermediate inverse conversion function, the type of the intermediate conversion function, and a parameter value based on the intermediate conversion function parameter.

As an intermediate parameter, the intermediate conversion function parameter may become the conversion function parameter of the current probe data group. As an alternative of the conversion function parameter of the current probe data group, when the function type of the intermediate inverse conversion function is inconsistent with the function type of the inverse conversion function of the reference probe data group, it indicates that spatial inverse conversion methods of the two are completely different. Therefore, the conversion function parameter of the reference probe data group cannot be used for the current probe data group, and it is determined that the conversion function parameter of the current probe data group needs to be updated. When the function type of the intermediate inverse conversion function is consistent with the function type of the inverse conversion function of the reference probe data group, it indicates that spatial conversion methods of the two are the same, and whether parameter values in this type of function are similar needs to be further determined, that is, a difference between corresponding parameters in two groups of parameter values is obtained. If the difference is less than the first preset threshold, it may be considered that the parameter values are similar, and therefore it is determined that the conversion function parameter of the current probe data group does not need to be updated. If the difference is greater than or equal to the first preset threshold, it may be considered that parameter values are not similar, and therefore it is determined that the conversion function parameter of the current probe data group needs to be updated.

In this case, when it is determined that the conversion function parameter of the current probe data group needs to be updated, the intermediate conversion function parameter is determined as the conversion function parameter of the current probe data group.

At the decoder side, because the probe data in the current probe data group cannot be obtained before decoding, the third probe data can only be probe data in first N probe data groups of the current probe data group, where $N \geq 1$. For example, a sequence number of the current probe data group is 6, and the first N probe data groups may include a probe data group whose sequence number is 5, the first N probe data groups may include a probe data group whose sequence numbers are 1, 3, and 5, or the first N probe data groups may include a probe data group whose sequence numbers are 4 and 5. This is not limited. The intermediate conversion function parameter is obtained based on the third probe data in the following steps:

1. Obtain a plurality of groups of candidate conversion function parameters.
2. Obtain a plurality of candidate inverse conversion functions based on the plurality of groups of candidate conversion function parameters, where the plurality of candidate inverse conversion functions correspond to the plurality of groups of candidate inverse conversion function parameters.
3. Perform spatial inverse conversion on the third probe data separately according to the plurality of candidate inverse conversion functions to obtain a plurality of pieces of candidate fourth probe data, where the plurality of pieces of candidate fourth probe data correspond to the plurality of candidate inverse conversion functions.
4. Obtain a plurality of rendering results based on the plurality of pieces of candidate fourth probe data, where the plurality of rendering results correspond to the plurality of pieces of candidate fourth probe data.
5. Obtain a target rendering result based on the third probe data.
6. Obtain a plurality of error values between the plurality of rendering results and the target rendering result, where the plurality of error values correspond to the plurality of rendering results.
7. Determine a candidate conversion function parameter corresponding to a smallest one of the plurality of error values as the intermediate conversion function parameter.

For the method, refer to the description of the encoder side. Details are not described herein again.

Optionally, the decoder side may transmit a rendering parameter to the encoder side. In this embodiment of this application, the decoder side may transmit the rendering parameter to the encoder side in an initial phase. If the rendering parameter of the decoder side changes in a use process, for example, a user adjusts luminance of a display, or switches between the SDR mode and the HDR mode, the decoder side may transmit an updated rendering parameter to the encoder side in real time. The decoder side feeds back the rendering parameter to the encoder side, and the encoder side can more accurately estimate a target rendering result, and more accurately calculate an optimal conversion function parameter, to improve rendering quality.

Optionally, the decoder side may transmit a camera position, a camera direction, and a field of view parameter to the encoder side, to determine a close-up view and a distant view of the decoder side, so that the encoder side can select different conversion function parameters for the close-up view and the distant view.

In conclusion, the conversion function parameter that is of the current probe data group and that is determined in the foregoing process may correspond to a rendering result closest to the target rendering result. This can improve final rendering quality.

The conversion function parameter that is of the current probe data group and that is determined in the foregoing process includes a type of the conversion function and a parameter value corresponding to the type of the conversion function. Therefore, a corresponding conversion function may be obtained. For details, refer to the foregoing description about the conversion function. Details are not described herein again.

Step 804: Perform spatial inverse conversion on the first probe data according to the inverse conversion function to obtain second probe data in the current probe data group, where the second probe data corresponds to one or more probes in a three-dimensional scene.

The second probe data corresponds to a linear domain signal. According to the conversion function in this embodiment of this application, the probe data is inversely converted from a non-linear domain to a linear domain to match human visual perception. In this way, a quantization error perceived by human eyes can become uniform even though the human eyes perceive the quantization error non-uniformly, and a visual perception error can be eliminated or reduced as much as possible.

Further, the decoder side may perform rendering based on the second probe data to obtain a rendered picture corresponding to the current probe data group.

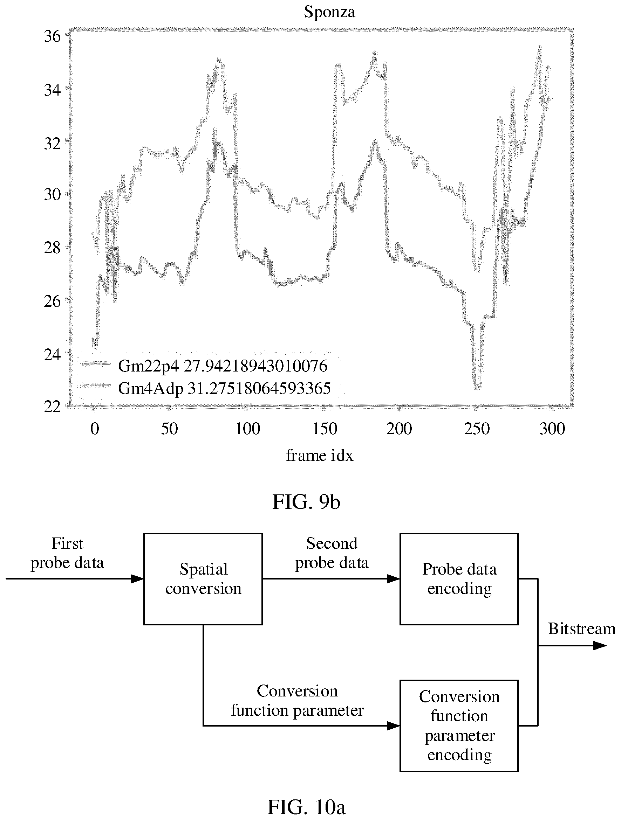

FIG. 9a and FIG. 9b show experimental simulation results obtained in solutions of this application. As shown in FIG. 9a, a bit width of first probe data is six bits. As shown in FIG. 9b, a bit width of first probe data is four bits. A horizontal axis is a frame sequence number, a vertical axis is a peak signal-to-noise ratio (peak signal-to-noise ratio, PSNR) of a rendering result, Gm22 represents standard static gamma 2.2, and GmAdp represents that an adaptive gamma function is used in a conversion function in this experiment in the solution of this application.

Based on an experimental result, compared with a static gamma function, in the solution provided in this embodiment of this application, an average increase of 1.1 dB to 3.3 dB can be achieved. Generally, if the peak signal-to-noise ratio (peak signal to noise ratio, PSNR) increases by 0.5 dB, human eyes can see a difference. If the PSNR increases by 2 dB, the difference is obvious. It can be learned that beneficial effect of this solution of this application is obvious.

In this embodiment of this application, a decoder side performs spatial inverse conversion on probe data obtained by parsing a bitstream, to obtain probe data in a linear domain, so that probe data closest to a target rendering result can be restored, to improve rendering effect.

The following describes the solutions in embodiments of this application by using several specific embodiments.

**Embodiment 1**

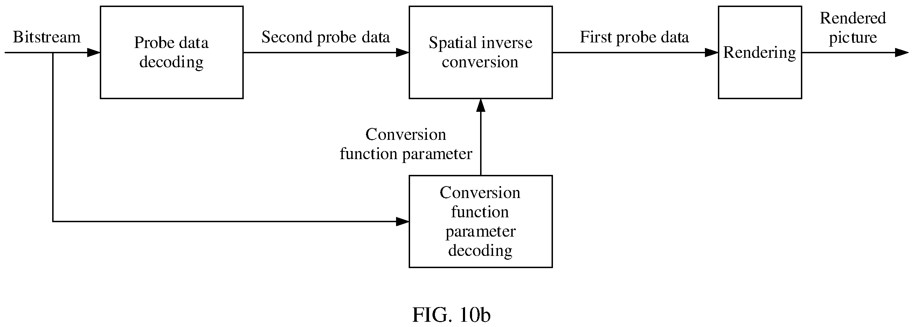

FIG. 10a and FIG. 10b are framework diagrams of examples of a probe data encoding and decoding method. As shown in FIG. 10a, an encoder side performs spatial conversion on first probe data (a bit width is Nbit) according to a conversion function to obtain second probe data (a bit width is Mbit), encodes the second probe data to obtain a bitstream, and encodes a conversion function parameter corresponding to the conversion function to obtain the bitstream. As shown in FIG. 10b, a decoder side decodes a bitstream to obtain second probe data (a bit width is Mbit) and a conversion function parameter, and performs spatial inverse conversion on the second probe data according to a conversion function corresponding to the conversion function parameter to obtain first probe data (a bit width is Nbit). Then, the decoder side performs rendering based on the first probe data to obtain a rendered picture.

**Embodiment 2**

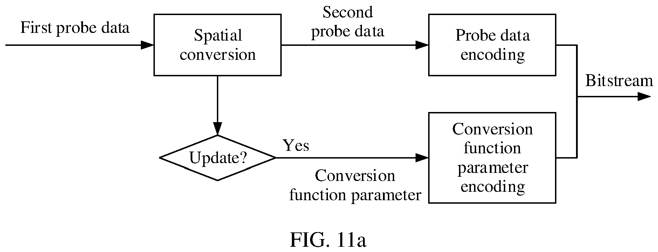

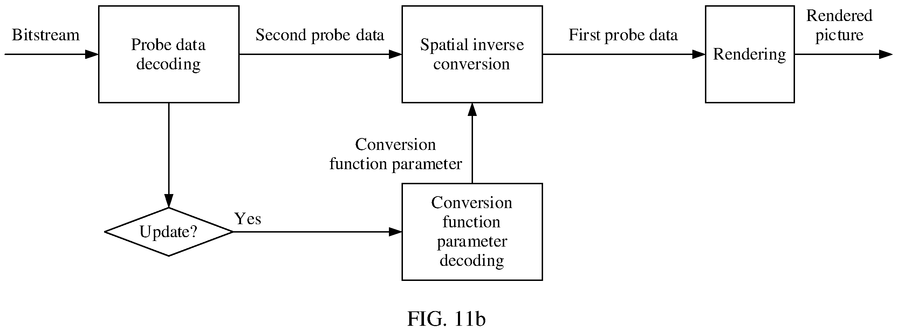

FIG. 11a and FIG. 11b are framework diagrams of examples of a probe data encoding and decoding method. As shown in FIG. 11a, an encoder side performs spatial conversion on first probe data (a bit width is Nbit) according to a conversion function to obtain second probe data (a bit width is Mbit), and encodes the second probe data to obtain a bitstream. When it is determined that the conversion function parameter needs to be updated, the conversion function parameter corresponding to the conversion function is encoded to obtain the bitstream. As shown in FIG. 11b, a decoder side decodes a bitstream to obtain second probe data (a bit width is Mbit), and performs spatial inverse conversion on the second probe data according to a conversion function corresponding to the conversion function parameter to obtain first probe data (a bit width is Nbit). When it is determined that the conversion function parameter needs to be updated, the bitstream is parsed to obtain the conversion function parameter. Then, the decoder side performs rendering based on the first probe data to obtain a rendered picture.

**Embodiment 3**

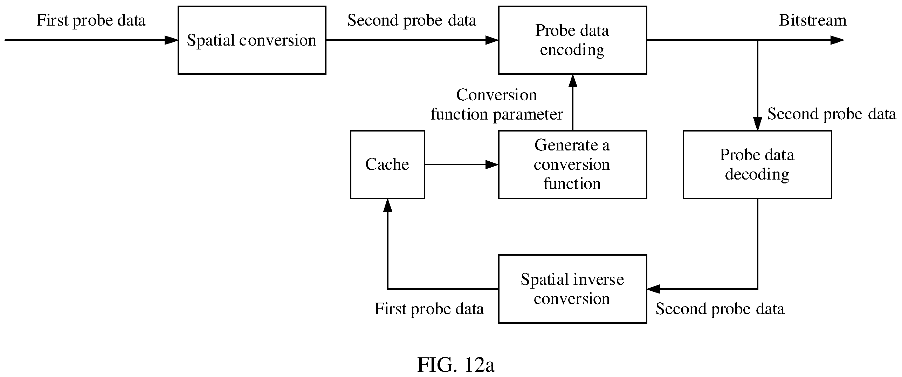

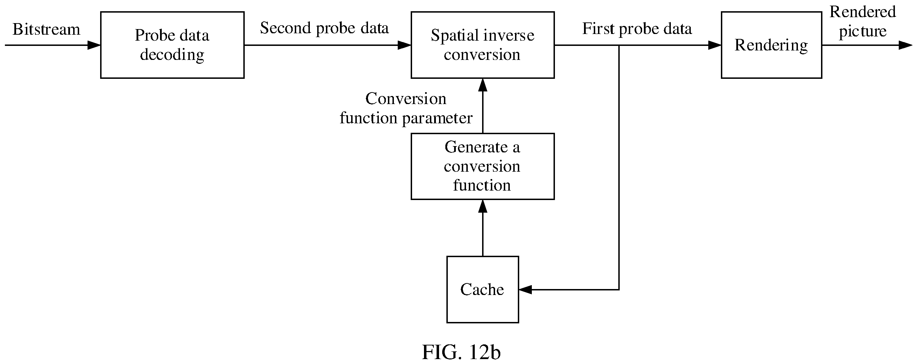

FIG. 12a and FIG. 12b are framework diagrams of examples of a probe data encoding and decoding method. As shown in FIG. 12a, after encoding second probe data, an encoder side decodes and reconstructs first probe data, and reconstructed first probe data is stored in a cache. The encoder side may generate a conversion function for a subsequent probe data group based on the data in the cache. As shown in FIG. 12b, after obtaining first probe data, a decoder side stores the first probe data in a cache, to generate a conversion function for a subsequent probe data group based on the data in the cache.

**Embodiment 4**

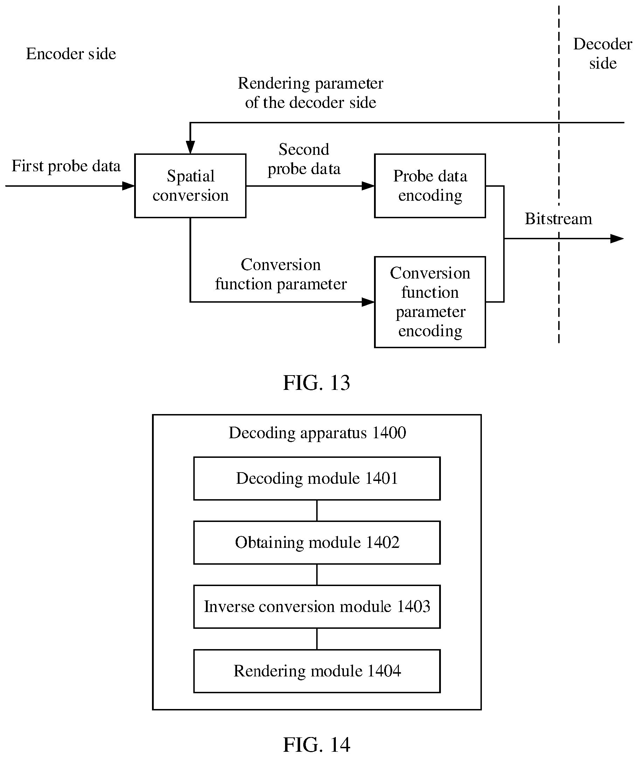

FIG. 13 is a framework diagram of an example of a probe data encoding and decoding method. As shown in FIG. 13, a decoder side may transmit a rendering parameter to an encoder side. The encoder side may estimate a target rendering result based on the rendering parameter of the decoder side. For details, refer to the foregoing description. Details are not described herein again.

FIG. 14 is a diagram of an example of a structure of a decoding apparatus 1400 according to an embodiment of this application. As shown in FIG. 14, the decoding apparatus 1400 in this embodiment may be applied to a decoder side. The decoding apparatus 1400 may include a decoding module 1401, an obtaining module 1402, an inverse conversion module 1403, and a rendering module 1404.

The decoding module 1401 is configured to: obtain a bitstream; parse the bitstream to obtain first probe data in a current probe data group, where the first probe data corresponds to a non-linear domain signal. The obtaining module 1402 is configured to obtain an inverse conversion function of the current probe data group. The inverse conversion module 1403 is configured to perform spatial inverse conversion on the first probe data according to the inverse conversion function to obtain second probe data in the current probe data group, where the second probe data corresponds to one or more probes in a three-dimensional scene, and the second probe data corresponds to a linear domain signal.

In a possible implementation, the obtaining module 1402 is specifically configured to: obtain a conversion function parameter of the current probe data group; and obtain the inverse conversion function of the current probe data group based on the conversion function parameter of the current probe data group.

In a possible implementation, the conversion function parameter includes a function type and a parameter value corresponding to the function type.

In a possible implementation, the obtaining module 1402 is specifically configured to: determine whether to update the conversion function parameter of the current probe data group; and when determining not to update the conversion function parameter of the current probe data group, determine a conversion function parameter of a reference probe data group as the conversion function parameter of the current probe data group.

In a possible implementation, the obtaining module 1402 is specifically configured to: when the current probe data group is a key group, determine to update the conversion function parameter of the current probe data group; or when the current probe data group is a non-key group, determine not to update the conversion function parameter of the current probe data group.

In a possible implementation, the key group is a probe data group using intra-frame coding, and the non-key group is a probe data group using inter-frame coding.

In a possible implementation, the decoding module 1401 is further configured to parse the bitstream to obtain an update flag; and the obtaining module is specifically configured to: when the update flag is a first value, determine not to update the conversion function parameter of the current probe data group; or when the update flag is a second value, determine to update the conversion function parameter of the current probe data group.

In a possible implementation, the obtaining module 1402 is further configured to: when determining to update the conversion function parameter of the current probe data group, obtain an intermediate conversion function parameter based on third probe data, where the conversion function parameter of the current probe data group is the intermediate conversion function parameter.

In a possible implementation, the obtaining module 1402 is specifically configured to: obtain an intermediate conversion function parameter based on third probe data; determine an intermediate inverse conversion function based on the intermediate conversion function parameter; obtain the conversion function parameter of the reference probe data group; determine an inverse conversion function of the reference probe data group based on the conversion function parameter of the reference probe data group; determine whether a function type of the intermediate inverse conversion function is consistent with a function type of the inverse conversion function of the reference probe data group; and when the function type of the intermediate inverse conversion function is consistent with the function type of the inverse conversion function of the reference probe data group, calculate a difference between the intermediate conversion function parameter and the conversion function parameter of the reference probe data group; and when the difference is less than a first preset threshold, determine not to update the conversion function parameter of the current probe data group; or when the difference is greater than or equal to the first preset threshold, determine to update the conversion function parameter of the current probe data group; or when the function type of the intermediate inverse conversion function is inconsistent with the function type of the inverse conversion function of the reference probe data group, determine to update the conversion function parameter of the current probe data group.

In a possible implementation, the obtaining module 1402 is further configured to: when determining to update the conversion function parameter of the current probe data group, determine the intermediate conversion function parameter as the conversion function parameter of the current probe data group.

In a possible implementation, the obtaining module 1402 is specifically configured to: obtain a plurality of groups of candidate conversion function parameters; obtain a plurality of candidate inverse conversion functions based on the plurality of groups of candidate conversion function parameters, where the plurality of candidate inverse conversion functions correspond to the plurality of groups of candidate conversion function parameters; perform spatial inverse conversion on the third probe data separately according to the plurality of candidate inverse conversion functions to obtain a plurality of pieces of candidate fourth probe data, where the plurality of pieces of candidate fourth probe data correspond to the plurality of candidate inverse conversion functions; obtain a plurality of rendering results based on the plurality of pieces of candidate fourth probe data, where the plurality of rendering results correspond to the plurality of pieces of candidate fourth probe data; obtain a target rendering result based on the third probe data; obtain a plurality of error values between the plurality of rendering results and the target rendering result, where the plurality of error values correspond to the plurality of rendering results; and determine a candidate conversion function parameter corresponding to a smallest one of the plurality of error values as the intermediate conversion function parameter.

In a possible implementation, the decoding module 1401 is further configured to parse the bitstream to obtain the conversion function parameter of the current probe data group.

In a possible implementation, the inverse conversion function is an inverse function of any one of the following functions: a gamma function, a PQ function, a log function, and an HLG function.

In a possible implementation, a rendering module 1404 is configured to perform rendering based on the second probe data to obtain a rendered picture corresponding to the current probe data group.

In a possible implementation, the obtaining module 1402 is further configured to: obtain the reference probe data group in a preset manner; or use a probe data group whose similarity with the current probe data group is greater than a second preset threshold as the reference probe data group.

The apparatus in this embodiment may be used to execute the technical solution in the method embodiment shown in FIG. 8, and implementation principles and technical effects of the apparatus are similar and are not described herein.

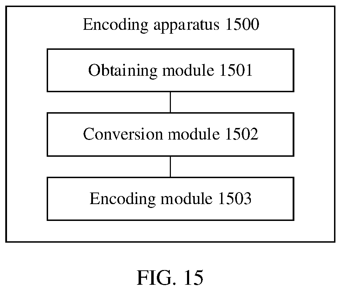

FIG. 15 is a diagram of an example of a structure of an encoding apparatus 1500 according to an embodiment of this application. As shown in FIG. 15, the encoding apparatus 1500 in this embodiment may be applied to an encoder side. The encoding apparatus 1500 may include an obtaining module 1501, a conversion module 1502, and an encoding module 1503.

The obtaining module 1501 is configured to: obtain first probe data in a current probe data group, where the first probe data corresponds to one or more probes in a three-dimensional scene, and the first probe data corresponds to a linear domain signal; and obtain a conversion function of the current probe data group. The conversion module 1502 is configured to perform spatial conversion on the first probe data according to the conversion function to obtain second probe data in the current probe data group, where the second probe data corresponds to a non-linear domain signal. The encoding module 1503 is configured to encode the second probe data to obtain a first bitstream.

In a possible implementation, the obtaining module 1501 is specifically configured to: obtain a conversion function parameter of the current probe data group; and obtain the conversion function of the current probe data group based on the conversion function parameter of the current probe data group.

In a possible implementation, the conversion function parameter includes a function type and a parameter value corresponding to the function type.

In a possible implementation, the obtaining module 1501 is specifically configured to: determine whether to update the conversion function parameter of the current probe data group; and when determining not to update the conversion function parameter of the current probe data group, determine a conversion function parameter of a reference probe data group as the conversion function parameter of the current probe data group.

In a possible implementation, the obtaining module 1501 is specifically configured to: when the current probe data group is a key group, determine to update the conversion function parameter of the current probe data group; or when the current probe data group is a non-key group, determine not to update the conversion function parameter of the current probe data group.

In a possible implementation, the key group is a probe data group using intra-frame coding, and the non-key group is a probe data group using inter-frame coding.

In a possible implementation, the obtaining module 1501 is further configured to: when determining to update the conversion function parameter of the current probe data group, obtain an intermediate conversion function parameter based on third probe data, where the conversion function parameter of the current probe data group is the intermediate conversion function parameter.

In a possible implementation, the obtaining module 1501 is specifically configured to: obtain an intermediate conversion function parameter based on third probe data; determine an intermediate conversion function based on the intermediate conversion function parameter; obtain the conversion function parameter of the reference probe data group; determine a conversion function of the reference probe data group based on the conversion function parameter of the reference probe data group; determine whether a type of the intermediate conversion function is consistent with a type of the conversion function of the reference probe data group; and when the type of the intermediate conversion function is consistent with the type of the conversion function of the reference probe data group, calculate a difference between the intermediate conversion function parameter and the conversion function parameter of the reference probe data group; and when the difference is less than a first preset threshold, determine not to update the conversion function parameter of the current probe data group; or when the difference is greater than or equal to the first preset threshold, determine to update the conversion function parameter of the current probe data group; or when the type of the intermediate conversion function is inconsistent with the type of the conversion function of the reference probe data group, determine to update the conversion function parameter of the current probe data group.

In a possible implementation, the obtaining module 1501 is further configured to: when determining to update the conversion function parameter of the current probe data group, determine the intermediate conversion function parameter as the conversion function parameter of the current probe data group.

In a possible implementation, the obtaining module 1501 is specifically configured to: obtain a plurality of groups of candidate conversion function parameters; obtain a plurality of candidate conversion functions based on the plurality of groups of candidate conversion function parameters, where the plurality of candidate conversion functions correspond to the plurality of groups of candidate conversion function parameters; perform spatial conversion on the third probe data separately according to the plurality of candidate conversion functions to obtain a plurality of pieces of candidate fourth probe data, where the plurality of pieces of candidate fourth probe data correspond to the plurality of candidate conversion functions; obtain a plurality of rendering results based on the plurality of pieces of candidate fourth probe data, where the plurality of rendering results correspond to the plurality of pieces of candidate fourth probe data; obtain a target rendering result based on the third probe data; obtain a plurality of error values between the plurality of rendering results and the target rendering result, where the plurality of error values correspond to the plurality of rendering results; and determine a candidate conversion function parameter corresponding to a smallest one of the plurality of error values as the intermediate conversion function parameter.

In a possible implementation, the obtaining module 1501 is specifically configured to: obtain a rendering parameter of a decoder side; and obtain the target rendering result through estimation based on the rendering parameter of the decoder side and the third probe data.

In a possible implementation, the conversion function is any one of a gamma function, a PQ function, a log function, and an HLG function.

In a possible implementation, the encoding module 1503 is further configured to encode the conversion function parameter of the current probe data group to obtain a second bitstream.

In a possible implementation, the encoding module 1503 is further configured to: when determining not to update the conversion function parameter of the current probe data group, set an update flag to a first value; or when determining to update the conversion function parameter of the current probe data group, set the update flag to a second value; and encode the update flag to obtain a third bitstream.

In a possible implementation, the obtaining module 1501 is further configured to: obtain the reference probe data group in a preset manner; or use a probe data group whose similarity with the current probe data group is greater than a second preset threshold as the reference probe data group.

The apparatus in this embodiment may be configured to perform the technical solution in the method embodiment shown in FIG. 4, and implementation principles and technical effects of the apparatus are similar and are not described herein

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A probe data processing method, wherein the method comprises:

   obtaining a bitstream;
   parsing the bitstream to obtain first probe data in a current probe data group, wherein the first probe data corresponds to a non-linear domain signal;
   obtaining an inverse conversion function of the current probe data group; and
   performing spatial inverse conversion on the first probe data according to the inverse conversion function to obtain second probe data in the current probe data group, wherein the second probe data corresponds to one or more probes in a three-dimensional scene, and the second probe data corresponds to a linear domain signal.

2. The method according to claim 1, wherein the obtaining an inverse conversion function of the current probe data group comprises:

obtaining a conversion function parameter of the current probe data group; and
obtaining the inverse conversion function of the current probe data group based on the conversion function parameter of the current probe data group.

3. The method according to claim 2, wherein the conversion function parameter comprises a function type and a parameter value corresponding to the function type.

4. The method according to claim 2 or 3, wherein the obtaining a conversion function parameter of the current probe data group comprises:

determining whether to update the conversion function parameter of the current probe data group; and
when determining not to update the conversion function parameter of the current probe data group, determining a conversion function parameter of a reference probe data group as the conversion function parameter of the current probe data group.

5. The method according to claim 4, wherein the determining whether to update the conversion function parameter of the current probe data group comprises:

when the current probe data group is a key group, determining to update the conversion function parameter of the current probe data group; or
when the current probe data group is a non-key group, determining not to update the conversion function parameter of the current probe data group.

6. The method according to claim 5, wherein the key group is a probe data group using intra-frame coding, and the non-key group is a probe data group using inter-frame coding.

7. The method according to claim 4, wherein the determining whether to update the conversion function parameter of the current probe data group comprises:

parsing the bitstream to obtain an update flag; and
when the update flag is a first value, determining not to update the conversion function parameter of the current probe data group; or
when the update flag is a second value, determining to update the conversion function parameter of the current probe data group.

8. The method according to any one of claims 5 to 7, wherein the obtaining a conversion function parameter of the current probe data group further comprises:
when determining to update the conversion function parameter of the current probe data group, obtaining an intermediate conversion function parameter based on third probe data, wherein the conversion function parameter of the current probe data group is the intermediate conversion function parameter.

9. The method according to claim 4, wherein the determining whether to update the conversion function parameter of the current probe data group comprises:

obtaining an intermediate conversion function parameter based on third probe data;
determining an intermediate inverse conversion function based on the intermediate conversion function parameter;
obtaining the conversion function parameter of the reference probe data group;
determining an inverse conversion function of the reference probe data group based on the conversion function parameter of the reference probe data group;
determining whether a function type of the intermediate inverse conversion function is consistent with a function type of the inverse conversion function of the reference probe data group; and
when the function type of the intermediate inverse conversion function is consistent with the function type of the inverse conversion function of the reference probe data group, calculating a difference between the intermediate conversion function parameter and the conversion function parameter of the reference probe data group; and
when the difference is less than a first preset threshold, determining not to update the conversion function parameter of the current probe data group; or

when the difference is greater than or equal to the first preset threshold, determining to update the conversion function parameter of the current probe data group; or

when the function type of the intermediate inverse conversion function is inconsistent with the function type of the inverse conversion function of the reference probe data group, determining to update the conversion function parameter of the current probe data group.

10. The method according to claim 9, wherein the obtaining a conversion function parameter of the current probe data group further comprises:

when determining to update the conversion function parameter of the current probe data group, determining the intermediate conversion function parameter as the conversion function parameter of the current probe data group.

11. The method according to claim 8 or 9, wherein the obtaining an intermediate conversion function parameter based on third probe data comprises:

obtaining a plurality of groups of candidate conversion function parameters;

obtaining a plurality of candidate inverse conversion functions based on the plurality of groups of candidate conversion function parameters, wherein the plurality of candidate inverse conversion functions correspond to the plurality of groups of candidate conversion function parameters;

performing spatial inverse conversion on the third probe data separately according to the plurality of candidate inverse conversion functions to obtain a plurality of pieces of candidate fourth probe data, wherein the plurality of pieces of candidate fourth probe data correspond to the plurality of candidate inverse conversion functions;

obtaining a plurality of rendering results based on the plurality of pieces of candidate fourth probe data, wherein the plurality of rendering results correspond to the plurality of pieces of candidate fourth probe data;

obtaining a target rendering result based on the third probe data;

obtaining a plurality of error values between the plurality of rendering results and the target rendering result, wherein the plurality of error values correspond to the plurality of rendering results; and

determining a candidate conversion function parameter corresponding to a smallest one of the plurality of error values as the intermediate conversion function parameter.

12. The method according to claim 2 or 3, wherein the obtaining a conversion function parameter of the current probe data group comprises:

parsing the bitstream to obtain the conversion function parameter of the current probe data group.

13. The method according to any one of claims 1 to 12, wherein the inverse conversion function is an inverse function of any one of the following functions: a gamma function, a PQ function, a log function, and an HLG function.

14. The method according to any one of claims 1 to 13, wherein after the performing spatial inverse conversion on the first probe data according to the inverse conversion function to obtain second probe data in the current probe data group, the method further comprises:

performing rendering based on the second probe data to obtain a rendered picture corresponding to the current probe data group.

15. The method according to claim 9, wherein the method further comprises:

obtaining the reference probe data group in a preset manner; or

using a probe data group whose similarity with the current probe data group is greater than a second preset threshold as the reference probe data group.

16. A probe data encoding method, wherein the method is applied to a first device, and the method comprises:

obtaining first probe data in a current probe data group, wherein the first probe data corresponds to one or more probes in a three-dimensional scene, and the first probe data corresponds to a linear domain signal;

obtaining a conversion function of the current probe data group;

performing spatial conversion on the first probe data according to the conversion function to obtain second probe data in the current probe data group, wherein the second probe data corresponds to a non-linear domain signal; and

encoding the second probe data to obtain a first bitstream.

17. The method according to claim 16, wherein the obtaining a conversion function of the current probe data group comprises:

obtaining a conversion function parameter of the current probe data group; and
obtaining the conversion function of the current probe data group based on the conversion function parameter of the current probe data group.

18. The method according to claim 17, wherein the conversion function parameter comprises a function type and a parameter value corresponding to the function type.

19. The method according to claim 17 or 18, wherein the obtaining a conversion function parameter of the current probe data group comprises:

determining whether to update the conversion function parameter of the current probe data group; and
when determining not to update the conversion function parameter of the current probe data group, determining a conversion function parameter of a reference probe data group as the conversion function parameter of the current probe data group.

20. The method according to claim 19, wherein the determining whether to update the conversion function parameter of the current probe data group comprises:

when the current probe data group is a key group, determining to update the conversion function parameter of the current probe data group; or
when the current probe data group is a non-key group, determining not to update the conversion function parameter of the current probe data group.

21. The method according to claim 20, wherein the key group is a probe data group using intra-frame coding, and the non-key group is a probe data group using inter-frame coding.

22. The method according to claim 20 or 21, wherein the obtaining a conversion function parameter of the current probe data group further comprises:
when determining to update the conversion function parameter of the current probe data group, obtaining an intermediate conversion function parameter based on third probe data, wherein the conversion function parameter of the current probe data group is the intermediate conversion function parameter.

23. The method according to claim 19, wherein the determining whether to update the conversion function parameter of the current probe data group comprises:

obtaining an intermediate conversion function parameter based on third probe data;
determining an intermediate conversion function based on the intermediate conversion function parameter;
obtaining the conversion function parameter of the reference probe data group;
determining a conversion function of the reference probe data group based on the conversion function parameter of the reference probe data group;
determining whether a type of the intermediate conversion function is consistent with a type of the conversion function of the reference probe data group; and
when the type of the intermediate conversion function is consistent with the type of the conversion function of the reference probe data group, calculating a difference between the intermediate conversion function parameter and the conversion function parameter of the reference probe data group; and
when the difference is less than a first preset threshold, determining not to update the conversion function parameter of the current probe data group; or
when the difference is greater than or equal to the first preset threshold, determining to update the conversion function parameter of the current probe data group; or
when the type of the intermediate conversion function is inconsistent with the type of the conversion function of the reference probe data group, determining to update the conversion function parameter of the current probe data group.

24. The method according to claim 23, wherein the obtaining a conversion function parameter of the current probe data group further comprises:

when determining to update the conversion function parameter of the current probe data group, determining the intermediate conversion function parameter as the conversion function parameter of the current probe data group.

25. The method according to claim 22 or 23, wherein the obtaining an intermediate conversion function parameter based on third probe data comprises:

obtaining a plurality of groups of candidate conversion function parameters;
obtaining a plurality of candidate conversion functions based on the plurality of groups of candidate conversion function parameters, wherein the plurality of candidate conversion functions correspond to the plurality of groups of candidate conversion function parameters;
performing spatial conversion on the third probe data separately according to the plurality of candidate conversion functions to obtain a plurality of pieces of candidate fourth probe data, wherein the plurality of pieces of candidate fourth probe data correspond to the plurality of candidate conversion functions;
obtaining a plurality of rendering results based on the plurality of pieces of candidate fourth probe data, wherein the plurality of rendering results correspond to the plurality of pieces of candidate fourth probe data;
obtaining a target rendering result based on the third probe data;
obtaining a plurality of error values between the plurality of rendering results and the target rendering result, wherein the plurality of error values correspond to the plurality of rendering results; and
determining a candidate conversion function parameter corresponding to a smallest one of the plurality of error values as the intermediate conversion function parameter.

26. The method according to claim 25, wherein the obtaining a target rendering result based on the third probe data comprises:

obtaining a rendering parameter of a decoder side; and
obtaining the target rendering result through estimation based on the rendering parameter of the decoder side and the third probe data.

27. The method according to any one of claims 16 to 26, wherein the conversion function is any one of a gamma function, a PQ function, a log function, and an HLG function.

28. The method according to any one of claims 16 to 27, wherein the method further comprises:
encoding the conversion function parameter of the current probe data group to obtain a second bitstream.

29. The method according to any one of claims 19 to 24, wherein the method further comprises:

when determining not to update the conversion function parameter of the current probe data group, setting an update flag to a first value; or
when determining to update the conversion function parameter of the current probe data group, setting the update flag to a second value; and
encoding the update flag to obtain a third bitstream.

30. The method according to claim 23, wherein the method further comprises:

obtaining the reference probe data group in a preset manner; or
using a probe data group whose similarity with the current probe data group is greater than a second preset threshold as the reference probe data group.

31. A decoding apparatus, comprising:

a decoding module, configured to: obtain a bitstream; parse the bitstream to obtain first probe data in a current probe data group, wherein the first probe data corresponds to a non-linear domain signal;
an obtaining module, configured to obtain an inverse conversion function of the current probe data group; and
an inverse conversion module, configured to perform spatial inverse conversion on the first probe data according to the inverse conversion function to obtain second probe data in the current probe data group, wherein the second probe data corresponds to one or more probes in a three-dimensional scene, and the second probe data corresponds to a linear domain signal.

32. The apparatus according to claim 31, wherein the obtaining module is specifically configured to: obtain a conversion function parameter of the current probe data group; and obtain the inverse conversion function of the current probe data group based on the conversion function parameter of the current probe data group.

33. The apparatus according to 32, wherein the conversion function parameter comprises a function type and a parameter value corresponding to the function type.

34. The apparatus according to claim 32 or 33, wherein the obtaining module is specifically configured to: determine whether to update the conversion function parameter of the current probe data group; and when determining not to update the conversion function parameter of the current probe data group, determine a conversion function parameter of a reference probe data group as the conversion function parameter of the current probe data group.

35. The apparatus according to claim 34, wherein the obtaining module is specifically configured to: when the current probe data group is a key group, determine to update the conversion function parameter of the current probe data group; or when the current probe data group is a non-key group, determine not to update the conversion function parameter of the current probe data group.

36. The apparatus according to claim 35, wherein the key group is a probe data group using intra-frame coding, and the non-key group is a probe data group using inter-frame coding.

37. The apparatus according to claim 34, wherein the decoding module is further configured to parse the bitstream to obtain an update flag; and
the obtaining module is specifically configured to: when the update flag is a first value, determine not to update the conversion function parameter of the current probe data group; or when the update flag is a second value, determine to update the conversion function parameter of the current probe data group.

38. The apparatus according to any one of claims 35 to 37, wherein the obtaining module is further configured to: when determining to update the conversion function parameter of the current probe data group, obtain an intermediate conversion function parameter based on third probe data, wherein the conversion function parameter of the current probe data group is the intermediate conversion function parameter.

39. The apparatus according to claim 34, wherein the obtaining module is specifically configured to: obtain an intermediate conversion function parameter based on third probe data; determine an intermediate inverse conversion function based on the intermediate conversion function parameter; obtain the conversion function parameter of the reference probe data group; determine an inverse conversion function of the reference probe data group based on the conversion function parameter of the reference probe data group; determine whether a function type of the intermediate inverse conversion function is consistent with a function type of the inverse conversion function of the reference probe data group; and when the function type of the intermediate inverse conversion function is consistent with the function type of the inverse conversion function of the reference probe data group, calculate a difference between the intermediate conversion function parameter and the conversion function parameter of the reference probe data group; and when the difference is less than a first preset threshold, determine not to update the conversion function parameter of the current probe data group; or when the difference is greater than or equal to the first preset threshold, determine to update the conversion function parameter of the current probe data group; or when the function type of the intermediate inverse conversion function is inconsistent with the function type of the inverse conversion function of the reference probe data group, determine to update the conversion function parameter of the current probe data group.

40. The apparatus according to claim 39, wherein the obtaining module is further configured to: when determining to update the conversion function parameter of the current probe data group, determine the intermediate conversion function parameter as the conversion function parameter of the current probe data group.

41. The apparatus according to claim 38 or 39, wherein the obtaining module is specifically configured to: obtain a plurality of groups of candidate conversion function parameters; obtain a plurality of candidate inverse conversion functions based on the plurality of groups of candidate conversion function parameters, wherein the plurality of candidate inverse conversion functions correspond to the plurality of groups of candidate conversion function parameters; perform spatial inverse conversion on the third probe data separately according to the plurality of candidate inverse conversion functions to obtain a plurality of pieces of candidate fourth probe data, wherein the plurality of pieces of candidate fourth probe data correspond to the plurality of candidate inverse conversion functions; obtain a plurality of rendering results based on the plurality of pieces of candidate fourth probe data, wherein the plurality of rendering results correspond to the plurality of pieces of candidate fourth probe data; obtain a target rendering result based on the third probe data; obtain a plurality of error values between the plurality of rendering results and the target rendering result, wherein the plurality of error values correspond to the plurality of rendering results; and determine a candidate conversion function parameter corresponding to a smallest one of the plurality of error values as the intermediate conversion function parameter.

42. The apparatus according to claim 32 or 33, wherein the decoding module is further configured to parse the bitstream to obtain the conversion function parameter of the current probe data group.

43. The apparatus according to any one of claims 31 to 42, wherein the inverse conversion function is an inverse function of any one of the following functions: a gamma function, a PQ function, a log function, and an HLG function.

44. The apparatus according to any one of claims 31 to 43, further comprising:
a rendering module, configured to perform rendering based on the second probe data to obtain a rendered picture corresponding to the current probe data group.

45. The apparatus according to claim 39, wherein the obtaining module is further configured to: obtain the reference probe data group in a preset manner; or use a probe data group whose similarity with the current probe data group is greater than a second preset threshold as the reference probe data group.

46. An encoding apparatus, comprising:

an obtaining module, configured to: obtain first probe data in a current probe data group, wherein the first probe data corresponds to one or more probes in a three-dimensional scene, and the first probe data corresponds to a linear domain signal; and obtain a conversion function of the current probe data group;
a conversion module, configured to perform spatial conversion on the first probe data according to the conversion function to obtain second probe data in the current probe data group, wherein the second probe data corresponds to a non-linear domain signal; and
an encoding module, configured to encode the second probe data to obtain a first bitstream.

47. The apparatus according to claim 46, wherein the obtaining module 500 is specifically configured to: obtain a conversion function parameter of the current probe data group; and obtain the conversion function of the current probe data group based on the conversion function parameter of the current probe data group.

48. The apparatus according to 47, wherein the conversion function parameter comprises a function type and a parameter value corresponding to the function type.

49. The apparatus according to claim 47 or 48, wherein the obtaining module is specifically configured to: determine whether to update the conversion function parameter of the current probe data group; and when determining not to update the conversion function parameter of the current probe data group, determine a conversion function parameter of a reference probe data group as the conversion function parameter of the current probe data group.

50. The apparatus according to claim 49, wherein the obtaining module is specifically configured to: when the current probe data group is a key group, determine to update the conversion function parameter of the current probe data group; or when the current probe data group is a non-key group, determine not to update the conversion function parameter of the current probe data group.

51. The apparatus according to claim 50, wherein the key group is a probe data group using intra-frame coding, and the non-key group is a probe data group using inter-frame coding.

52. The apparatus according to claim 50 or 51, wherein the obtaining module is further configured to: when determining to update the conversion function parameter of the current probe data group, obtain an intermediate conversion function parameter based on third probe data, wherein the conversion function parameter of the current probe data group is the intermediate conversion function parameter.

53. The apparatus according to claim 49, wherein the obtaining module is specifically configured to: obtain an intermediate conversion function parameter based on third probe data; determine an intermediate conversion function based on the intermediate conversion function parameter; obtain the conversion function parameter of the reference probe data group; determine a conversion function of the reference probe data group based on the conversion function parameter of the reference probe data group; determine whether a type of the intermediate conversion function is consistent with a type of the conversion function of the reference probe data group; and when the type of the intermediate conversion function is consistent with the type of the conversion function of the reference probe data group, calculate a difference between the intermediate conversion function parameter and the conversion function parameter of the reference probe data group; and when the difference is less than a first preset threshold, determine not to update the conversion function parameter of the current probe data group; or when the difference is greater than or equal to the first preset threshold, determine to update the conversion function parameter of the current probe data group; or when the type of the intermediate conversion function is inconsistent with the type of the conversion function of the reference probe data group, determine to update the conversion function parameter of the current probe data group.

54. The apparatus according to claim 53, wherein the obtaining module is further configured to: when determining to update the conversion function parameter of the current probe data group, determine the intermediate conversion function parameter as the conversion function parameter of the current probe data group.

55. The apparatus according to claim 52 or 53, wherein the obtaining module is specifically configured to: obtain a plurality of groups of candidate conversion function parameters; obtain a plurality of candidate conversion functions based on the plurality of groups of candidate conversion function parameters, wherein the plurality of candidate conversion functions correspond to the plurality of groups of candidate conversion function parameters; perform spatial conversion on the third probe data separately according to the plurality of candidate conversion functions to obtain a plurality of pieces of candidate fourth probe data, wherein the plurality of pieces of candidate fourth probe data correspond to the plurality of candidate conversion functions; obtain a plurality of rendering results based on the plurality of pieces of candidate fourth probe data, wherein the plurality of rendering results correspond to the plurality of pieces of candidate fourth probe data; obtain a target rendering result based on the third probe data; obtain a plurality of error values between the plurality of rendering results and the target rendering result, wherein the plurality of error values correspond to the plurality of rendering results; and determine a candidate conversion function parameter corresponding to a smallest one of the plurality of error values as the intermediate conversion function parameter.

56. The apparatus according to claim 55, wherein the obtaining module is specifically configured to: obtain a rendering parameter of a decoder side; and obtain the target rendering result through estimation based on the rendering parameter of the decoder side and the third probe data.

57. The apparatus according to any one of claims 46 to 56, wherein the conversion function is any one of a gamma function, a PQ function, a log function, and an HLG function.

58. The apparatus according to any one of claims 46 to 57, wherein the encoding module is further configured to encode the conversion function parameter of the current probe data group to obtain a second bitstream.

59. The apparatus according to any one of claims 49 to 54, wherein the encoding module is further configured to: when determining not to update the conversion function parameter of the current probe data group, set an update flag to a first value; or when determining to update the conversion function parameter of the current probe data group, set the update flag to a second value; and encode the update flag to obtain a third bitstream.

60. The apparatus according to claim 53, wherein the obtaining module is further configured to: obtain the reference probe data group in a preset manner; or use a probe data group whose similarity with the current probe data group is greater than a second preset threshold as the reference probe data group.

61. A decoder, comprising:

   one or more processors; and
   a memory, configured to store one or more programs, wherein
   when the one or more programs are executed by the one or more processors, the one or more processors are enabled to implement the method according to any one of claims 1 to 15.

62. An encoder, comprising:

one or more processors; and

a memory, configured to store one or more programs, wherein

when the one or more programs are executed by the one or more processors, the one or more processors are enabled to implement the method according to any one of claims 16 to 30.

63. A computer-readable storage medium, comprising a computer program, wherein when the computer program is executed on a computer, the computer is enabled to perform the method according to any one of claims 1 to 30.

64. A computer program product, wherein the computer program product comprises instructions, and when the instructions are run on a computer or a processor, the computer or the processor is enabled to implement the method according to any one of claims 1 to 30.

FIG. 1a

EP 4 478 292 A1

Probe

3D scene

Objects

FIG. 1b

FIG. 2a

Data form conversion module

| Quantization module | Domain conversion module | Second rearrangement module |

FIG. 2b

Bitstream → Decoding module → Data form conversion module → Probe data

First attribute data

First rearrangement module

Second attribute data → Probe data

Decoder

FIG. 3a

Data form conversion module

| Inverse quantization module | Domain conversion module | Second rearrangement module |

FIG. 3b

400

| Obtain first probe data in a current probe data group, where the first probe data corresponds to one or more probes in a three-dimensional scene | 401 |

↓

| Obtain a conversion function of the current probe data group | 402 |

↓

| Perform spatial conversion on the first probe data according to the conversion function to obtain second probe data in the current probe data group | 403 |

↓

| Encode the second probe data to obtain a first bitstream | 404 |

FIG. 4

FIG. 5

**PQ OETF**

FIG. 6

**HLG OETF**

FIG. 7

800

| Obtain a bitstream | 801 |

↓

| Parse the bitstream to obtain first probe data in a current probe data group | 802 |

↓

| Obtain a conversion function of the current probe data group | 803 |

↓

| Perform spatial inverse conversion on the first probe data according to an inverse conversion function to obtain second probe data in the current probe data group, where the second probe data corresponds to one or more probes in a three-dimensional scene | 804 |

## FIG. 8

Sponza

PSNR

Gm22p6 38.42557359893182
Gm6Adp 39.567277233885854

frame idx

## FIG. 9a

FIG. 9b

FIG. 10a

Bitstream → Probe data decoding → Second probe data → Spatial inverse conversion → First probe data → Rendering → Rendered picture

Conversion function parameter

Conversion function parameter decoding

FIG. 10b

First probe data → Spatial conversion

Second probe data → Probe data encoding

Spatial conversion → Update?

Update? — Yes → Conversion function parameter → Conversion function parameter encoding

Probe data encoding → Bitstream

Conversion function parameter encoding → Bitstream

FIG. 11a

FIG. 11b

EP 4 478 292 A1

First probe data → Spatial conversion → Second probe data → Probe data encoding → Bitstream

Conversion function parameter

Cache → Generate a conversion function → Probe data decoding ← Second probe data

Spatial inverse conversion

First probe data

Second probe data

FIG. 12a

FIG. 12b

Encoder side

Decoder side

Rendering parameter
of the decoder side

First probe data → Spatial conversion

Second probe data → Probe data encoding

Conversion function parameter → Conversion function parameter encoding

Bitstream →

FIG. 13

Decoding apparatus 1400

Decoding module 1401

Obtaining module 1402

Inverse conversion module 1403

Rendering module 1404

FIG. 14

Encoding apparatus 1500

Obtaining module 1501

Conversion module 1502

Encoding module 1503

FIG. 15

## INTERNATIONAL SEARCH REPORT

International application No.

**PCT/CN2023/074436**

### A. CLASSIFICATION OF SUBJECT MATTER

G06T9/00(2006.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 探针, 编码, 解码, 压缩, 渲染, 非线性, 线性, 转换, probe, encode, decode, compress, render, non-linear, linear, convert

### C. DOCUMENTS CONSIDERED TO BE RELEVANT

| Category* | Citation of document, with indication, where appropriate, of the relevant passages | Relevant to claim No. |
|---|---|---|
| Y | CN 114028804 A (NVIDIA CORP.) 11 February 2022 (2022-02-11) description, paragraphs 19-39 and 141-196 | 1-64 |
| Y | CN 111435990 A (HUAWEI TECHNOLOGIES CO., LTD. et al.) 21 July 2020 (2020-07-21) description, paragraphs 3-4 and 70-75 | 1-64 |
| Y | CN 106204701 A (ZHEJIANG UNIVERSITY) 07 December 2016 (2016-12-07) description, paragraphs 20-37 | 1-64 |
| A | CN 109359618 A (BEIJING SENSETIME SCIENCE TECHNOLOGY DEVELOPMENT CO., LTD.) 19 February 2019 (2019-02-19) entire document | 1-64 |
| A | CN 111277840 A (HUAWEI TECHNOLOGIES CO., LTD. et al.) 12 June 2020 (2020-06-12) entire document | 1-64 |
| A | US 2021012562 A1 (NVIDIA CORP.) 14 January 2021 (2021-01-14) entire document | 1-64 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 May 2023** | **06 May 2023** |

| Name and mailing address of the ISA/CN | Authorized officer |
|---|---|
| China National Intellectual Property Administration (ISA/CN)<br>China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 114028804 | A | 11 February 2022 | US | 2022028158 | A1 | 27 January 2022 |
| | | | | DE | 102021207678 | A1 | 27 January 2022 |
| CN | 111435990 | A | 21 July 2020 | CN | 111435990 | B | 09 September 2022 |
| CN | 106204701 | A | 07 December 2016 | CN | 106204701 | B | 30 April 2019 |
| CN | 109359618 | A | 19 February 2019 | CN | 109359618 | B | 22 February 2022 |
| CN | 111277840 | A | 12 June 2020 | WO | 2020114393 | A1 | 11 June 2020 |
| | | | | CN | 111277840 | B | 08 February 2022 |
| US | 2021012562 | A1 | 14 January 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210254652